# EUROPEAN PATENT APPLICATION

(11) **EP 4 597 989 A1**
(43) Date of publication of application: **06.08.2025**
(21) Application number: 23873296.0
(22) Date of filing: 04.10.2023
(51) Int. Cl.: H04L 69/00, F17C 5/06, F17C 13/02, H04L 69/24, F17C 13/00, H04L 69/08

(54) **METHOD FOR NEGOTIATING COMMUNICATION PROTOCOL FOR HYDROGEN FUELING, AND DEVICE USING SAME**

(30) Priority: 28.09.2022 KR 20220123288; 28.09.2022 KR 20220123289; 28.09.2022 KR 20220123290
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: PARK, Cheol Woo, Hwaseong-si, Gyeonggi-do 18280 (KR); YOON, A Eun, Hwaseong-si, Gyeonggi-do 18280 (KR); KIM, Hyung Ki, Hwaseong-si, Gyeonggi-do 18280 (KR); SHIN, Ye Eun, Hwaseong-si, Gyeonggi-do 18280 (KR); SHIN, Min Ho, Yongin-si, Gyeonggi-do 17058 (KR)
(74) Representative: Hoffmann Eitle
(86) International application number: PCT/KR2023/015245
(87) International publication number: WO 2024/072189

(57) **Abstract**

A method according to an embodiment of the present invention comprises the steps of: transmitting, to a communication entity related to a dispenser, a first message including a list of at least one first fueling protocol supported by a mobility and first communication protocols required for executing the one or more fueling protocols; and receiving, from the communication entity related to the dispenser, a response message including a second fueling protocol determined from the at least one first fueling protocol.

## Description

### TECHNICAL FIELD

The present disclosure relates to a communication technology for hydrogen fueling for a hydrogen fueled mobility and, more particularly, to a hydrogen fueling process suitable for enhancing safety, compatibility, efficiency, and reliability of the hydrogen fueling, a communication protocol negotiation method for the hydrogen fueling process, and a device, equipment, and/or system for implementing the method.

### BACKGROUND ART

The statements in this section merely provide background information related to the present embodiments and may not constitute the prior art.

A hydrogen vehicle or a hydrogen electric vehicle refers to a vehicle driven by electrical energy generated by a reaction of high-pressure hydrogen stored in the vehicle and oxygen in the air, and producing little pollution. Most hydrogen electric vehicles are driven by electricity generated by a fuel cell system utilizing the hydrogen as an energy source. The hydrogen electric vehicle not only exhausts pure water (H2O) vapor in the course of generating the electricity but also removes ultrafine dusts in the air while being driven, and thus are attracting attention as a future eco-friendly mobility. Since the fuel, i.e. hydrogen, is abundant on earth and the energy production process is eco-friendly, the hydrogen electric vehicle is spotlighted as a technology with the potential to be utilized across industries.

A hydrogen fueled mobility refers to a mobility that uses the hydrogen as an energy source or generates the electrical energy using the hydrogen as the fuel to drive an electric motor by the electrical energy. In addition to the hydrogen electric vehicle described above, the hydrogen fueled mobility may include an aerial mobility as well as an industrial truck, a train, a ship, and an aircraft that generate the electrical energy using the hydrogen as the fuel and is driven by the electrical energy.

The hydrogen electric vehicle produces electrical energy by supplying the high-pressure hydrogen stored safely in a hydrogen fuel storage tank and the oxygen introduced through an air supply system to a fuel cell stack and causing an electrochemical reaction between the hydrogen and the oxygen to occur. The electrical energy produced in the fuel cell stack is converted into kinetic energy through a motor to drive the hydrogen electric vehicle, and an operating hydrogen electric vehicle discharges only the pure water vapor through an exhaust port.

A hydrogen fueled car other than the hydrogen electric vehicle is also a vehicle that uses the hydrogen as the fuel. The hydrogen fueled car is driven by an electric motor which is rotated by heat generated by directly burning the hydrogen in the engine. The method of fueling/supplying the hydrogen for the hydrogen fueled car is not much different from the hydrogen fueling/supply method for the hydrogen electric vehicle.

The control scheme for fueling or supply hydrogen to the hydrogen fueled mobility aims to control the hydrogen fueling/supply such that a temperature and pressure of a compressed hydrogen storage system (CHSS) on the fuel cell side are maintained below a certain temperature limit and a pressure limit to ensure the safety.

The hydrogen fueling/supply process, the control scheme, and the protocol thereof in a conventional hydrogen electric vehicle had been stipulated before wired/wireless communications or computing techniques for the control became mature, and thus do not utilize the state-of-art information and communications technologies (ICT) to their full extent. Therefore, the conventional hydrogen fueling/supply subsystem in the hydrogen electric vehicle is inefficient, slow, and is not suitable for large-scale hydrogen fueling.

In particular, regarding hydrogen fueling communications, most hydrogen fueling control devices use unidirectional infrared communication devices for wireless communications, and thus still have limitations and vulnerabilities of the unidirectional communication.

### DISCLOSURE OF INVENTION

### TECHNICAL PROBLEM

To solve the problems above, exemplary embodiments provide a hydrogen fueling process for overcoming limitations and vulnerabilities of a conventional unidirectional communication for hydrogen fueling of a hydrogen fueled mobility and for enhancing safety, compatibility, efficiency, and/or reliability of the hydrogen fueling, in a communication protocol, a communication protocol negotiation method for the hydrogen fueling process, and/or a device for implementing the method.

Exemplary embodiments provide a bidirectional communication process for hydrogen fueling providing rules and principles enabling a mobility including a fuel cell electric vehicle (FCEV) and a dispenser supplying hydrogen fuel to the mobility to fall back to another hydrogen fueling protocol and a communication protocol suitable for the hydrogen fueling protocol so that the mobility and the dispenser choose a protocol maximizing an interoperability rather than choosing their most preferred fueling protocols and communication protocols, a communication protocol negotiation process taking into account bidirectional/unidirectional communications, and a device for implementing the process.

Exemplary embodiments provide a bidirectional communication process for hydrogen fueling that can control the mobility and the dispenser to determine an advanced communication medium to effectively achieve a hydrogen fueling goal, a communication protocol negotiation process taking into account bidirectional/unidirectional communications, and a device for implementing the process.

### TECHNICAL SOLUTION

According to an aspect of an exemplary embodiment, a communication protocol negotiation method according to an exemplary embodiment of the present disclosure, which is performed by a communication controller of the hydrogen fueled mobility, may include: an operation of transmitting, to a communication entity related to the dispenser, a first message including a list of at least one first fueling protocol supported by the hydrogen fueled mobility and at least one first communication protocol required for the at least one first fueling protocol; and an operation of receiving, from the communication entity related to the dispenser, a response message including a second fueling protocol determined from the at least one first fueling protocol.

The first message may include priority information based on a preference of the hydrogen fueled mobility.

The response message may include the second fueling protocol determined from the at least one first fueling protocol based on the priority information based on the preference.

The response message may include the second fueling protocol determined from at least one common protocol candidate commonly included in the at least one first fueling protocol and at least one fueling protocol supported by the dispenser.

The response message may include the second fueling protocol determined from the at least one first fueling protocol by the controller of the dispenser.

The response message may include a second communication protocol required for the second fueling protocol determined by the controller of the dispenser.

The response message may include the second communication protocol determined from the at least one second communication protocol candidate required for the second fueling protocol by the controller of the dispenser.

The response message may include the second communication protocol determined, by the controller of the dispenser, from a plurality of communication protocols required for the second fueling protocol according to a fallback device type determined based on the interoperability and/or a backward compatibility between the hydrogen fueled mobility and the dispenser.

According to the method of negotiating the hydrogen fueling communication protocol according to an exemplary embodiment of the present disclosure, a negotiation request message for a negotiation of the communication protocol for hydrogen fueling between the hydrogen fueled mobility and the dispenser may be initially transmitted by the communication controller of the hydrogen fueled mobility to the communication entity related to the dispenser.

The method of negotiating the hydrogen fueling communication protocol according to an exemplary embodiment of the present disclosure may further include an operation of transmitting a confirmation message in response to the response message by the communication controller of the hydrogen fueled mobility to proceed with the negotiation, when the response message is accepted as a response to the negotiation request message.

In the operation of transmitting the first message, the first message may be transmitted to the communication entity related to the dispenser as the negotiation request message.

According to another aspect of an exemplary embodiment, a communication control apparatus of the hydrogen fueled mobility according to an exemplary embodiment of the present disclosure may include a memory storing at least one program instruction and a processor executing the at least one program instruction. The processor, when executing the at least one program instruction, is configured to: transmit, to a communication entity related to the dispenser, a first message including a list of at least one first fueling protocol supported by the hydrogen fueled mobility and at least one first communication protocol required for the at least one first fueling protocol; and receive, from the communication entity related to the dispenser, a response message including a second fueling protocol determined from the at least one first fueling protocol.

In the communication control apparatus of the hydrogen fueled mobility according to an exemplary embodiment of the present disclosure, the first message may include priority information based on the preference of the hydrogen fueled mobility.

In the communication control apparatus of the hydrogen fueled mobility according to an exemplary embodiment of the present disclosure, the response message may include the second fueling protocol determined from the at least one first fueling protocol based on the priority information based on the preference.

In the communication control apparatus of the hydrogen fueled mobility according to an exemplary embodiment of the present disclosure, the response message may include the second fueling protocol determined from at least one common protocol candidate commonly included in the at least one first fueling protocol and at least one fueling protocol supported by the dispenser.

In the communication control apparatus of the hydrogen fueled mobility according to an exemplary embodiment of the present disclosure, the response message may include the second fueling protocol determined from the at least one first fueling protocol by the controller of the dispenser.

In the communication control apparatus of the hydrogen fueled mobility according to an exemplary embodiment of the present disclosure, the response message may include a second communication protocol required for the second fueling protocol by the controller of the dispenser.

In the communication control apparatus of the hydrogen fueled mobility according to an exemplary embodiment of the present disclosure, the response message may include the second communication protocol determined from the at least one second communication protocol candidate required for the second fueling protocol by the controller of the dispenser.

In the communication control apparatus of the hydrogen fueled mobility according to an exemplary embodiment of the present disclosure, the response message may include the second communication protocol determined, by the controller of the dispenser, from a plurality of communication protocols required for the second fueling protocol according to a fallback device type determined based on the interoperability and/or a backward compatibility between the hydrogen fueled mobility and the dispenser.

In the communication control apparatus of the hydrogen fueled mobility according to an exemplary embodiment of the present disclosure, the processor may transmit a negotiation request message for a negotiation of the hydrogen fueling communication protocol between the hydrogen fueled mobility and the dispenser to the communication entity related to the dispenser.

The processor may transmit a confirmation message in response to the response message to proceed with the negotiation, when the response message is accepted as a response to the negotiation request message.

The processor may transmit the first message to the communication entity related to the dispenser as the negotiation request message.

### ADVANTAGEOUS EFFECTS

According to the communication protocol negotiation method for the hydrogen fueling process and a device for implementing the method, i.e. the hydrogen fueling controller or the communication controller, according to the present disclosure, it is possible to overcome limitations and vulnerabilities of a conventional unidirectional communication for hydrogen fueling of a hydrogen fueled mobility including a fuel cell electric vehicle (FCEV) or a hydrogen fuel engine and to enhance the safety, compatibility, efficiency, and/or reliability of the hydrogen fueling.

An exemplary embodiment of the present disclosure may provide a communication protocol negotiation method for the hydrogen fueling and communication protocol fallback rules, in which the mobility and the dispenser may select a hydrogen fueling protocol and a communication protocol required for the hydrogen fueling protocol according to use cases while considering priorities according to a preference of the mobility or the dispenser, maximizing the interoperability between the mobility and the dispenser, and considering the backward compatibility.

According to an exemplary embodiment of the present disclosure, it is possible to provide rules and principles required for the communication protocol negotiation that enables the mobility and the dispenser to collaboratively determine an advanced communication medium efficiently for effectively achieving a hydrogen fueling goal.

### DESCRIPTION OF DRAWINGS

FIG. 1 is an illustration of a hydrogen fueling system for a hydrogen electric vehicle (FCEV) suitable for applying a bidirectional communication process for hydrogen fueling according to an exemplary embodiment of the present disclosure;
FIG. 2 is a partially enlarged view of a physical engagement structure between the FCEV and the dispenser in the hydrogen fueling system of FIG. 1;
FIG. 3 is a graph showing a state change of hydrogen fuel occurring during a hydrogen fueling process in the hydrogen fueling system of FIG. 1;
FIG. 4 illustrates a framework for functional blocks for performing a series of hydrogen fueling procedure that may employ the bidirectional communication process for hydrogen fueling according to an exemplary embodiment of the present disclosure;
FIG. 5 illustrates an example of a communication stack related to the use cases that may be employed in the bidirectional communication process for hydrogen fueling according to an exemplary embodiment of the present disclosure, based on the open systems interconnection reference model (OSI) 7 layers;
FIG. 6 is a sequence diagram illustrating a pairing process of the discovery and pairing procedure that may be employed in the bidirectional communication process for hydrogen fueling according to an exemplary embodiment of the present disclosure;
FIG. 7 illustrates examples of a backward compatibility that may be employed in the bidirectional communication process for hydrogen fueling according to an exemplary embodiment of the present disclosure;
FIG. 8 is a table summarizing examples of backward compatibilities applicable in the bidirectional communication process for hydrogen fueling according to an exemplary embodiment of the present disclosure;
FIG. 9 illustrates use classifications of communication data (UCDC) applicable in the bidirectional communication process for hydrogen fueling according to an exemplary embodiment of the present disclosure and backward compatibilities in the use classifications of communication data;
FIG. 10 is a sequence diagram illustrating an authorization process of a communication security procedure that may be employed in the bidirectional communication process for hydrogen fueling according to an exemplary embodiment of the present disclosure;
FIG. 11 is a sequence diagram illustrating a communication protocol negotiation procedure that may be employed in the bidirectional communication process for hydrogen fueling according to an exemplary embodiment of the present disclosure;
FIG. 12 is a sequence diagram illustrating a communication protocol negotiation procedure that may be employed in the bidirectional communication process for hydrogen fueling according to another embodiment of the present disclosure;
FIG. 13 is a sequence diagram illustrating a fueling parameter exchange/negotiation procedure that may be employed in the bidirectional communication process for hydrogen fueling according to an exemplary embodiment of the present disclosure;
FIG. 14 is a sequence diagram illustrating a fueling parameter exchange/negotiation procedure that may be employed in the bidirectional communication process for hydrogen fueling according to an exemplary embodiment of the present disclosure;
FIG. 15 is a sequence diagram illustrating a safety check-in procedure that may be employed in the bidirectional communication process for hydrogen fueling according to an exemplary embodiment of the present disclosure;
FIG. 16 is a sequence diagram illustrating a monitoring and control procedure that may be employed in the bidirectional communication process for hydrogen fueling according to an exemplary embodiment of the present disclosure;
FIG. 17 is a sequence diagram illustrating a safety check-out procedure that may be employed in the bidirectional communication process for hydrogen fueling according to an exemplary embodiment of the present disclosure;
FIG. 18 is a sequence diagram illustrating a termination procedure that may be employed in the bidirectional communication process for hydrogen fueling according to an exemplary embodiment of the present disclosure;
FIG. 19 is a sequence diagram illustrating an error handling procedure that may be employed in the bidirectional communication process for hydrogen fueling according to an exemplary embodiment of the present disclosure;
FIG. 20 is a sequence diagram illustrating an emergency handling procedure that may be employed in the bidirectional communication process for hydrogen fueling according to an exemplary embodiment of the present disclosure;
FIG. 21 is a schematic block diagram of a device using the bidirectional communication process for hydrogen fueling (simply referred to as a 'hydrogen fueling device') according to another exemplary embodiment of the present disclosure; and
FIG. 22 is a block diagram illustrating software modules that may be employed in the hydrogen fueling device of FIG. 21.

### BEST MODE

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

A hydrogen electric vehicle may generally include a hydrogen fuel cell electric vehicle (FCEV) that uses a fuel cell and a vehicle with an internal combustion engine (ICE) that uses hydrogen as fuel. The hydrogen electric vehicle may also be referred to simply as an FCEV.

Although embodiments related to the hydrogen fuel cell vehicle are described in detail below, the ICE-based hydrogen electric vehicle using the hydrogen as fuel may be used in another embodiment of the present disclosure. In the following description, a hydrogen fueling protocol and/or a hydrogen fueling communication protocol is described with a focus on a hydrogen fuel cell vehicle. However, the hydrogen fueling protocol and/or the hydrogen fueling communication protocol may also be applicable to the ICE-based hydrogen electric vehicle according to another embodiment of the present disclosure.

Hydrogen fluid fuel may include gaseous hydrogen fuel or liquid hydrogen fuel.

"Compressed Hydrogen Storage System (CHSS)": An apparatus including at least one tank mounted on a vehicle to compress and store the hydrogen.

"Pressure Relief Device (PRD)": A device disposed in the CHSS and capable of isolating stored hydrogen from the other part of the fueling system and environment and exhausting the hydrogen to the outside.

"Hydrogen fueling": A process of supplying the high-pressure hydrogen from a dispenser of a hydrogen fueling station to the vehicle to accumulate the hydrogen in the tank of the vehicle. The hydrogen fueling may also be referred to as "fueling" in terms of supplying hydrogen fuel to the hydrogen electric vehicle. That is, the term "fueling," "hydrogen fueling," or "charging" used herein may mean supplying the hydrogen fuel. For example, a fueling protocol may be referred to as a fueling protocol, a fueling session may be referred to as a fueling session, and a fueling method may be referred to as a hydrogen fueling method or a fueling method.

"Pressure Ramp Rate (PRR)": An increase rate of a pressure of CHSS and measured in mega-pascals per minute (MPa/min).

"Average Pressure Ramp Rate (APRR)": An average of the increase rate of the pressure from the beginning to the end of the hydrogen fueling.

"Precooling": A process of cooling the hydrogen in a hydrogen fueling station before the fueling.

"Dispenser": A component supplying precooled hydrogen to the CHSS. The dispenser may be arranged at the hydrogen fueling station to perform a hydrogen fueling operation between the hydrogen storage tank of the hydrogen fueling station and the CHSS of the vehicle.

"Nozzle": A device that is connected to a hydrogen dispensing system of the hydrogen fueling station and may be coupled to a receptacle of the hydrogen electric vehicle and to supply the hydrogen fuel to the hydrogen electric vehicle.

"Fueling session": A communication session occurring over an entire range of use cases for the hydrogen fueling.

Meanwhile, although embodiments related to hydrogen electric vehicles or fuel cell electric vehicles (FCEVs) are described in detail below, it will be apparent to those skilled in the art that the inventive concept of the present disclosure may be applied to various types of hydrogen fueled mobility. A hydrogen fueled mobility refers to a mobility that uses the hydrogen as an energy source or generates the electrical energy using the hydrogen as the fuel to drive an electric motor by the electrical energy. In addition to the hydrogen electric vehicle described above, the hydrogen fueled mobility may include an aerial mobility as well as an industrial truck, a train, a ship, and an aircraft that generate the electrical energy using the hydrogen as the fuel and is driven by the electrical energy.

In addition, a bidirectional communication process hydrogen fueling of the present disclosure may be partially applicable to a building or a facility using the hydrogen as an energy source in addition to the hydrogen fuel mobility.

In the following description, the hydrogen fuel may include at least one of the gaseous hydrogen and the liquid hydrogen. The hydrogen fuel basically means compressed hydrogen but is not limited thereto.

In addition, although the bidirectional communication process for hydrogen fueling is described in terms of the hydrogen electric vehicle (FCEV) for convenience of explanation, the present disclosure is not limited thereto, and the hydrogen fueling bidirectional communication process may be applicable to the hybrid electric vehicle (EV) using the hydrogen as fuel or the ICE-based vehicle, also.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity. However, the present disclosure is not intended to claim the conventional component, and the conventional component may be included as an elements of the device or method of the present disclosure without deviating from the concept or spirit of the present disclosure.

Exemplary embodiments of the present disclosure will now be described in detail with reference to the accompanying drawings.

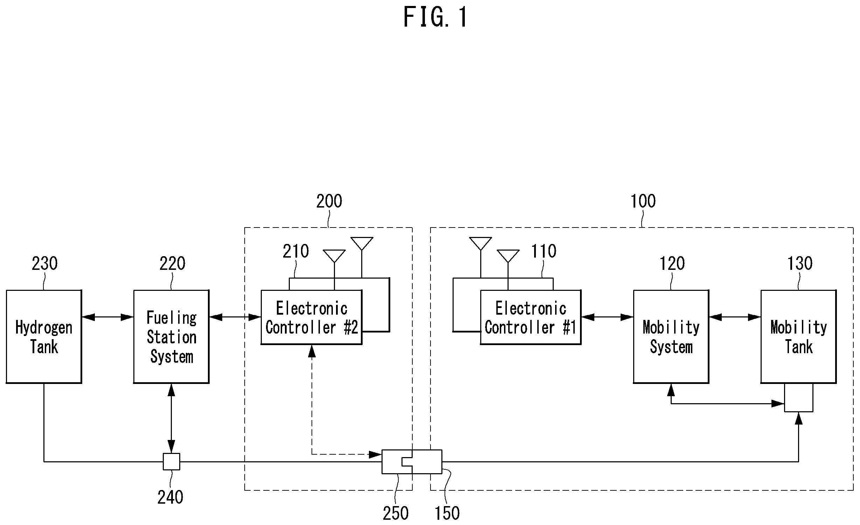

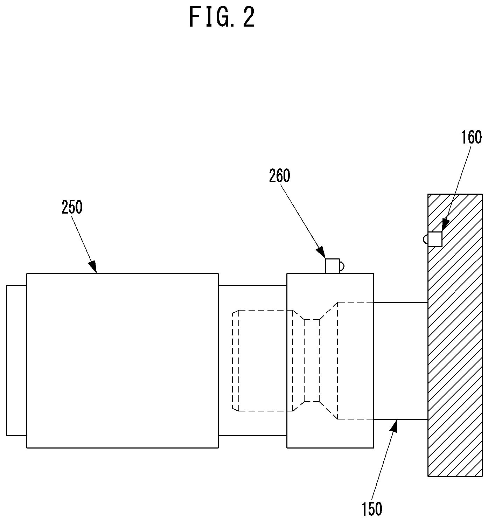

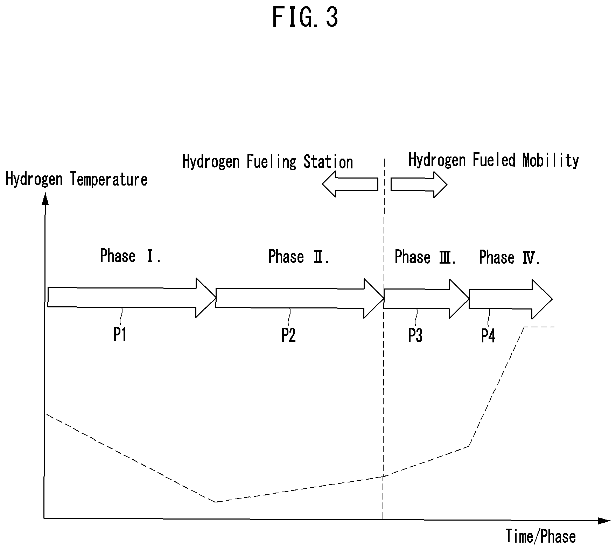

FIG. 1 is an illustration of a hydrogen fueling system for a hydrogen electric vehicle (FCEV) suitable for applying a bidirectional communication process for hydrogen fueling according to an exemplary embodiment of the present disclosure. FIG. 2 is a partially enlarged view of a physical engagement structure between the FCEV and the dispenser in the hydrogen fueling system of FIG. 1. FIG. 3 is a graph showing a state change of hydrogen fuel occurring during a hydrogen fueling process in the hydrogen fueling system of FIG. 1.

Referring to FIG. 1, the hydrogen fueling system may generally be configured to include a hydrogen fueling station and a hydrogen fueled mobility 100.

The hydrogen fueled mobility 100 may be equipped with an electronic controller 110, a vehicle system 120, a vehicle tank 130, and a receptacle 150 for the hydrogen fueling in addition to mechanical devices, electrical devices, electronic devices, and communication devices basically required for the vehicle.

The electronic controller 110 may transmit and receive signals and data to and from the hydrogen fueling station or an electronic controller 210 of the hydrogen fueling station by a wired or wireless communication and process the signals and data to control the hydrogen fueling on the vehicle side. The electronic controller 110 may be implemented by at least a portion of another electronic control unit mounted on the vehicle and may be referred to as a first electronic controller or an electronic control unit #1.

The vehicle system 120 may be connected to the first electronic controller 110 and may be configured to control the hydrogen fueling or a hydrogen discharging of the vehicle tank 130 according to a signal or command from the first electronic controller 110 and monitor a status of the vehicle tank 130. The vehicle system 120 may include a component that controls the operation of the fuel cell system or performs such control operations depending on the implementation, or may be configured to be combined with the component. The vehicle system 120 may be referred to as a vehicle safety system.

There may be at least one, preferably a plurality of vehicle tanks 130 in the vehicle. The vehicle tank 130 may compress and store the hydrogen supplied from the hydrogen fueling station under a control of the vehicle safety system, and may discharge the stored hydrogen.

In addition, the vehicle tank 130 may correspond to a hydrogen storage system installed in the vehicle. In such a case, the hydrogen storage system may include a high-pressure hydrogen storage tank, a pressure control device, a high-pressure pipe, and an external frame. The high-pressure hydrogen storage tank may have a capacity of tens to hundreds of liters, and may has a shape that small storage tanks are connected in parallel. A boss unit allowing a passage of the hydrogen fuel may be combined to the high-pressure hydrogen storage tank, and thus the fueling and the discharging of the hydrogen may be controlled through the boss unit. The boss unit may include a valve, a pressure reducing device, and various sensors for measurements. Such a hydrogen storage system is known as compressed hydrogen storage systems (CHSS). The term "vehicle tank" used herein may refer to the CHSS for convenience of explanation.

The hydrogen fueled mobility100 may be equipped with a fuel cell system including a fuel cell stack, but the present disclosure is not limited thereto. The hydrogen fueled mobility 100 may be referred to simply as "FCEV", "vehicle", or "mobility" for convenience of explanation. The term "vehicle" or "mobility" used herein may be understood to include a hydrogen fueled vehicle or hydrogen fueled mobility using the hydrogen as fuel in addition to the hydrogen electric vehicle.

The hydrogen fueling station may include a dispenser 200, the electronic controller 210, a fueling station system 220, a hydrogen tank 230, a station box 240, and a nozzle 250.

The dispenser 200 may supply the hydrogen from the hydrogen tank 230 to the vehicle through a nozzle 250 securely coupled to the receptacle 150 of the vehicle under a control of the fueling station system 220. The dispenser 200 may include the electronic controller 210 inside a housing, but the present disclosure is not limited thereto. The nozzle 250 may be installed at an end of a cable that extends a certain length outside the housing of the dispenser 200.

The electronic controller 210 may transmit and receive signals and data to and from the first electronic controller 110 of the vehicle by a wired or wireless communication and process the signals and data to control the hydrogen fueling on the hydrogen fueling station side. The electronic controller 210 may exchange prescribed signals and data with the fueling station system 220. The electronic controller 210 may also be referred to as the second electronic controller or an electronic control unit #2.

Each of the first electronic controller 110 and the second electronic controller 210 may be comprised of a plurality of electronic control units, and may be configured such that each communication protocol may be executed by different electronic control units. Such a configuration may be useful when a falling back is used for backward compatibility and when a bidirectional communication cannot be used and a unidirectional communication may be used be used instead. In addition, the configuration may be useful in case where a combination of different communication methods is used, for example, when NFC is used for a pairing and WiFi is used for an actual fueling.

The fueling station system 220 may monitor or control pressure, speed, and temperature of the hydrogen discharged from the hydrogen tank 230 according to the signal and/or data from the second electronic controller. To this end, the fueling station system 220 may control an operation of the station box 240 connected to a discharging port or a discharging valve of the hydrogen tank 230. The fueling station system 220 may also be referred to as the fueling station safety system.

In an exemplary embodiment of the present disclosure, a communication entity related to the dispenser 200 for communicating with the vehicle/mobility 100 may be the electronic controller 210 or may be a separate communication device/apparatus mounted on the dispenser 200. Alternatively, an electronic controller or a separate communication device/apparatus in the fueling station system 220 may communicate with the vehicle/mobility 100 in place of the dispenser 200.

In another exemplary embodiment of the present disclosure, a communication control device/apparatus in the vehicle/mobility 100 for communicating with the dispenser 200 side may be the first electronic controller 110 or may be a separate communication control device/apparatus.

The hydrogen tank 230 stores the hydrogen or compressed hydrogen. The hydrogen tank 230 may discharge stored hydrogen at a predetermined pressure or speed under a control of the fueling station safety system 220. The hydrogen tank may also be referred to as a hydrogen storage tank.

The station box 240 may be provided with a control valve having an inlet connected to the discharging port or discharging valve of the hydrogen tank 230 and an outlet connected to the dispenser 200 or the nozzle 250 coupled to the dispenser 200. The station box 240 may be provided with a means for controlling the pressure, speed, and temperature of the discharged hydrogen, or another component performing such a function. In addition, the station box 240 may be provided with sensors for measuring the pressure, speed, and temperature of the discharged hydrogen.

The nozzle 250 may be connected to a hydrogen fueling system of the dispenser 200 through a conduit or flexible pipe of a predetermined length. The nozzle 250 may be provided with a shape and structure that tightly and firmly engages with the receptacle of the vehicle.

As shown in FIG. 2, the nozzle 250 may be engaged with the receptacle 150. A first sensor 160 installed in the vehicle and a second sensor 260 attached to the nozzle 250 may transmit signals or information regarding the coupling status of the nozzle 250 and the receptacle 150 to the first electronic controller or the vehicle safety system and to the second electronic controller or the fueling station safety system.

Pre-cooled hydrogen fuel may be supplied from the hydrogen fueling station to the hydrogen fueled mobility 100 through the dispenser 200. At this time, the hydrogen fueling process may be described by parameters including the pressure increase rate (PRR) and/or the average pressure increase rate (APRR).

The dispenser 200 may be in charge of an interface between the hydrogen fueling station and the mobility 100. The dispenser 200 may be configured to control a target pressure and an injection speed for the hydrogen fueling based on information indirectly acquired from the vehicle tank 130 and fueling information of the hydrogen fueling station.

Conventionally, there are two methods of transmitting information from the mobility 100 to the dispenser 200: a communication method and a non-communication method. In case of the communication method, the temperature and pressure values of the vehicle tank 130 of the mobility 100 are transmitted to the dispenser 200 in a unidirectional manner, and the dispenser 200 does not actively utilize the information but utilizes the information only as a safety reference for an emergency stop at a temperature or pressure limit, for example. Furthermore, the hydrogen fueling protocol for safe and speedy fueling is managed by the dispenser 200, which has only a minimal safety management device that automatically releases the hydrogen through the pressure relief device (PRD) without any active safety management scheme for the vehicle tank 130.

Meanwhile, in order to cope with a phenomenon that the temperature of hydrogen gas increases during hydrogen fueling depicted in FIG. 3, the hydrogen fueling station may be equipped with a pre-cooler. The pre-cooler may lower the temperature of hydrogen fuel through pre-cooling. The pre-cooler may be installed in or combined with at least one of the hydrogen tank 230 and the station box 240. Alternatively, the pre-cooler may be installed in or combined with a pipe transporting the hydrogen in the hydrogen fueling station.

The dispenser 200 or the second electronic controller may be equipped with a fueling control logic, which may control the hydrogen fueling process based on state information such as the temperature and pressure of the hydrogen fuel supplied to the vehicle or charged in the vehicle tank 130, and fueling state information such as a state of charge (SOC) of the CHSS.

As described above, the hydrogen fueling process between the hydrogen fueled mobility 100 and the hydrogen fueling station is controlled by the dispenser 200, and the dispenser 200 may include a protocol for supplying the hydrogen fuel to the vehicle according to a prescribed procedure. This hydrogen fueling protocol may also be installed in the vehicle. The protocol installed in the vehicle or the dispenser 200 may include at least some of communication protocols based on SAE standards, ISO standards, or similar standards.

For minimum safety requirements, simulations based on a thermodynamic modeling may be performed for various situations, and a table-based or MC-formula based partial real-time correction may be performed utilizing parameters derived from the simulation. The minimum safety requirements may include upper limits on the temperature and pressure conditions of the CHSS and a guideline for the fueling rate (SOC).

In case that state values related to the hydrogen fueling are not actively controlled in the dispenser 200, the table-based correction has disadvantageous may show a very low efficiency because the temperature of the precooled hydrogen fuel provided by the fueling station or the temperature of the vehicle tank 130 measured in the mobility 100 is not utilized, and thus it may be difficult to flexibly respond to changes in surrounding conditions. The MC-Formula based correction allows to compensate the temperature of the precooled hydrogen fuel in real time, but a calculation and an application of the method are complicated, which may put a limitation in the application and making it difficult to expand. As a result, the conventional communication protocols which were developed with a primary goal of completing the fueling safely, cannot actively respond to unexpected situations such as an excessive pre-cooling or an overheating of the vehicle tank 130 and may bring about problems such as increased operating costs caused by the overcooling and a delayed fueling caused by the overheating.

For example, when the hydrogen fuel is charged into the vehicle tank 130, an internal temperature of the vehicle tank rises due to a compression heat, and thus the temperature of the hydrogen fuel inside the vehicle tank rises. The vehicle tank is designed such that a dome and a body of the vehicle tank of the vehicle tank are wrapped with carbon fiber having a low thermal conductivity to block a heat exchange between external atmosphere and the hydrogen fuel stored in the vehicle tank. Therefore, when the temperature of the hydrogen fuel inside the vehicle tank rises during the fueling process, the temperature rise revealed on a surface of the vehicle tank may be small compared with the internal temperature rise until the fueling is completed because of the low thermal characteristics of the vehicle tank.

Meanwhile, the temperature control of the hydrogen fueling process may aim to ensure that the internal temperature of the vehicle tank 130 is kept below 85°C at the time of the completion of the fueling by supplying the pre-cooled hydrogen gas. During the hydrogen fueling process, the temperature of the hydrogen fuel may undergo a change according to a characteristic curve shown in FIG. 3. The temperature of the hydrogen fuel may decrease at a constant rate in phase 1 (P1) which is a pre-cooling stage of the hydrogen fueling station. In phase 2 (P2) during which the hydrogen fuel is supplied from the hydrogen fueling station to hydrogen mobility such as the vehicle, the temperature of the hydrogen fuel gradually increases due to a thermal mass of the hydrogen fueling station. In phase 3 (P3) during which the hydrogen fuel is transferred inside the vehicle to the vehicle tank, the temperature of the hydrogen fuel increases at a higher increasing rate due to a thermal mass of the vehicle. In phase 4 (P4) during which the hydrogen fuel is compressed and stored in the vehicle tank, the temperature of the hydrogen fuel may rapidly increase due to compression heat.

According to the present embodiment, the hydrogen fueling procedure may be performed effectively by an active state variable control reflecting real-time measurement data through a bidirectional communication process for hydrogen fueling. In addition, a hydrogen fueling protocol for the procedure may be provided.

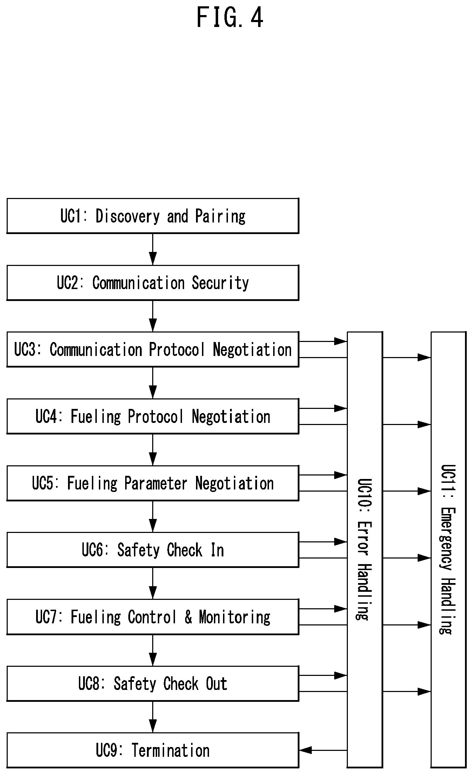

FIG. 4 illustrates a framework for functional blocks for performing a series of hydrogen fueling procedure that may employ the bidirectional communication process for hydrogen fueling (hereinbelow, referred to as "hydrogen fueling framework") according to an exemplary embodiment of the present disclosure.

Referring to FIG. 4, the hydrogen fueling framework may include functional blocks for respective use cases (UCs) including a discovery and pairing functional block (hereinbelow, referred to simply as "UC1" or "UC-1"), a communication security functional block (UC2 or UC-2), a communication protocol negotiation functional block (UC3 or UC-3), a fueling protocol negotiation functional block (UC4 or UC-4), a fueling parameter negotiation functional block (UC5 or UC-5), a safety check-in functional block (UC6 or UC-6), a fueling control and monitoring functional block (UC7 or UC-7), a safety check-out functional block (UC8 or UC-8), a termination functional block (UC9 or UC-9), an error handling functional block (UC10 or UC-10), and an emergency handling functional block (UC11 or UC-11).

The use cases UC10 and UC11 may be individually connected to the use cases UC3 through UC8 and may perform the error handling and/or the emergency handling in each use case.

The use cases are functional blocks collectively providing the entire hydrogen fueling procedures of the hydrogen fueling system in a consistent manner for safe and secure fueling communication. The vehicle and the dispenser may perform the use cases sequentially in a certain order to achieve the hydrogen fueling.

After the nozzle of the dispenser is coupled to the receptacle of the vehicle, the vehicle and the dispenser may perform the fueling communication by implementing the use cases in the order shown in FIG. 4. However, the vehicle and the dispenser may omit come of the use cases if necessary according to a prescribed requirement.

Each of the above-described use cases may be implemented through communications between a dispenser control system of the dispenser supplying the hydrogen as fuel to the hydrogen fuel vehicle and the hydrogen fuel vehicle according to a fueling protocol for hydrogen fuel vehicle.

Meanwhile, the hydrogen fuel vehicle (hereinafter, also referred to simply as "vehicle") and the dispenser implementing the use cases may perform data exchanges for an identification of the vehicle in the use case UC-1. For this purpose, the vehicle may be equipped with sensors, an electric control unit (ECU), a transmitter, and a receiver. The receiver may be integrated with the transmitter in case of a bidirectional communication.

The dispenser may be configured to receive certain data from the vehicle. The dispenser may store the certain data in a programmable logic controller (PLC) of the fueling station to store data logging data or to use in the fueling protocol. The data logging may refer to a process of collecting data for a certain period of time to analyze a certain operating state of the hydrogen fueling system or to record data-based events/operations of the system or a network environment, or data collected by the process. In case of the bidirectional communication, the fueling station may be equipped with sensors specified by the fueling protocol, and the PLC or the electronic control unit of the fueling station may acquire measurements from the sensors and transmit the measurements to the vehicle. The vehicle or the fueling station may use a conventional communication protocol standard for the communication such as an infrared communication, WiFi, and Bluetooth.

In addition, the vehicle or the dispenser may establish a communication channel with a dispenser or a vehicle, respectively, that is physically coupled at its vehicle-dispenser interface. A pairing process for establishing such a communication channel may be performed using a wired, optical, or wireless communication technology.

The discovery and pairing procedure or the pairing process may have pre-conditions that the nozzle of the dispenser is inserted into and securely coupled to the receptacle of the vehicle fueling receptacle. The vehicle fueling receptacle may be referred to simply as a vehicle receptacle or receptacle.

In addition, the vehicle and the dispenser are typically aware of the communication protocol to follow by default. Thus, communication performed subsequently to the use case UC-1 may rely solely on the communication protocol agreed upon in a current use case as a post-condition of the discovery and pairing procedure or the pairing process. In case that a communication protocol outside an agreed scope is selected by the vehicle or the dispenser, the selected communication will not be performed. That is, even if the pairing process is completed successfully, the fueling will not be authorized.

All methods used to pair the vehicle and the dispenser may be configured so as not to increase a risk of ignition or explosion beyond an acceptable level. For example, all wired pairing methods may be configured to mitigate or prevent a spark hazard caused by an electrostatic discharge.

In terms of an effectiveness of the physical pairing, any method used to pair the vehicle and the dispenser may be integrated into the vehicle-to-dispenser interface or installed such that a proximity between the fueling receptacle of the vehicle and the nozzle and hose assembly of the dispenser is maintained. Here, the interface may refer to something physically integrated into an interface between the nozzle and receptacle. The proximity may be defined by hardware associated with the pairing method. For example, a physical geometry for the infrared communication may be specified, including an allowed distance between the transmitter and receiver. In addition, the physical geometry of the hydrogen fueling hardware may be defined in advance, in which case the proximity does not include a pairing method that may result in a risk of associating the dispenser to a vehicle that is not physically coupled to the dispenser, e.g., a long-range wireless communication technology such as Bluetooth. The infrared communication may be referred to as infrared data association (IrDA) communication and may include a bidirectional infrared (bi-IrDA) communication.

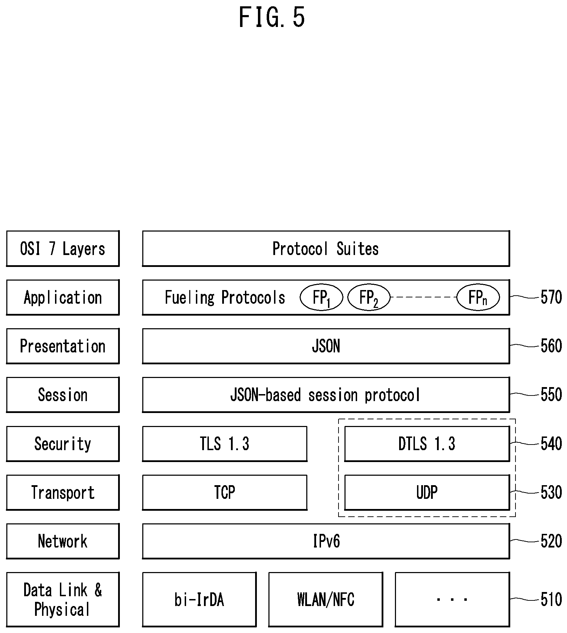

FIG. 5 illustrates an example of a communication stack related to the use cases that may be employed in the bidirectional communication process for hydrogen fueling according to an exemplary embodiment of the present disclosure, based on the open systems interconnection reference model (OSI) 7 layers.

As shown in FIG. 5, the communication stack related to the use cases of the bidirectional communication process for hydrogen fueling (hereinbelow, referred to as "hydrogen fueling communication stack") may be represented by a suite of protocols corresponding to respective one of OSI 7 layers including a data link and physical layer, a network layer, a transport layer, a security layer, a session layer, a presentation layer, and an application layer.

That is, the hydrogen fueling communication stack may include at least one first protocol 510 selected from the bidirectional IrDA (bi-IrDA), WLAN, NFC, and so on as a protocol of the data link and physical layer of the OSI 7 layers.

In addition, the hydrogen fueling communication stack may include an Internet protocol version 6 (IPv6) protocol 520 as a protocol of the network layer of the OSI 7 layers.

In addition, the hydrogen fueling communication stack may include at least one third protocol 530 selected from transmission control protocol (TCP), user datagram protocol (UDP), and so on as a protocol of the transport layer of the OSI 7 layers.

In addition, the hydrogen fueling communication stack may include at least one fourth protocol 540 selected from transport layer security (TLS), datagram transmission layer security (DTLS), and so on as a protocol of the security layer of the OSI 7 layers. The TLS may include versions such as TLS 1.2, and TLS 1.3, and the DTLS may include versions such as DTLS 1.2 and DTLS 1.3. The TLS may be implemented over TCP sockets, and DTLS may be implemented over UDP sockets.

In addition, the hydrogen fueling communication stack may include a JSON-based session protocol 550 as a protocol of the session layer of the OSI 7 layers. The JSON-based session protocol 550 may be used for the communications between the vehicle and the dispenser or in the data transmission between the electronic control unit of the vehicle and the electronic control unit of the fueling station.

In addition, the hydrogen fueling communication stack may include a Javascript object notation (JSON) 560 as a protocol of the presentation layer of the OSI 7 layers. The JSON is one of formats that may be used when sending data from a server to a client. Using the JSON, protocol messages between the vehicle and the dispenser or between the electronic control unit of the vehicle and the electronic control unit of the fueling station may be represented in JSON format.

In addition, the hydrogen fueling communication stack may include hydrogen fueling-related fueling protocols FP 570 as a protocol of the application layer of the OSI 7 layers. The fueling protocols 570 may include a first fueling protocol FP1, a second fueling protocol FP2, and an n-th fueling protocol FPn, where 'n' may be a natural number greater than or equal to 3.

In an alternative embodiment, the hydrogen fueling communication stack may include a power line communications (PLC) or WLAN as a protocol of the data link and physical layers and the network layer; TCP and/or IPv6 protocol as protocols of the transport layer and the security layer; binary extensible markup language (XML) protocol as a protocol of the session layer; and one of the existing protocols used in the electric vehicles as protocols of the presentation layer and the application layer. The existing protocols used in the electric vehicles may include at least one protocol for direct current (DC) charging, alternate current (AC) charging, wireless power transfer (WPT), or automatic connection device pantograph (ACDP) charging of the electric vehicles.

Communication data items that may be exchanged between the vehicle and the fueling station through the hydrogen fueling communication stack may be summarized as shown in Table 1.

**[Table 1]**

| Item | From Dispenser to Vehicle | From Vehicle to Dispenser |
|---|---|---|
| Communication | - Fuel delivery pressure | - Receptacle type |
| Data | - Fuel delivery temperature | - Working pressure |
| Item | - Delivery flow rate | - Tank volume |
| | - Maximum fuel delivery pressure | - Measured pressure |
| | - Minimum fuel delivery temperature | - Measured temperature |
| | - Maximum fuel delivery temperature | - Maximum working pressure |
| | - Maximum delivery flow rate | - Maximum working temperature |
| | - Ambient temperature | |
| | - Fueling communication status | |
| | - Target SOC | |
| | - Fueling in-progress status | |
| | - Emergency stop status | |
| | - Fueling protocol category | |
| | - Amount of supplied hydrogen | |
| | - Target fueling duration (expected) | |

Meanwhile, the discovery and pairing procedure use case UC1 enables a device to identify a communication counterpart (i.e., the communication module of the vehicle or the dispenser) responsible for controlling a receptacle or nozzle physically coupled to the device. In addition, the use case UC1 may also define an incompatibility identifying method and a safety device mechanism.

In this use case UC1, the vehicle and the dispenser may attempt to find a common communication technology to execute the fueling protocol. The vehicle and the dispenser may discover each other based on a discovery mechanism provided by the data link and physical layers and initiate the communication. An additional pairing procedure may be required to establish a communication channel with the device connected to the fueling hose assembly. A separate pairing channel may be required to send the pairing information in case where a correct pairing is not ensured by the communication channel, for example, in case of the wireless communication. However, if the pairing is implicitly ensured, a communication channel integrated with the hose assembly, for example, may be sufficient.

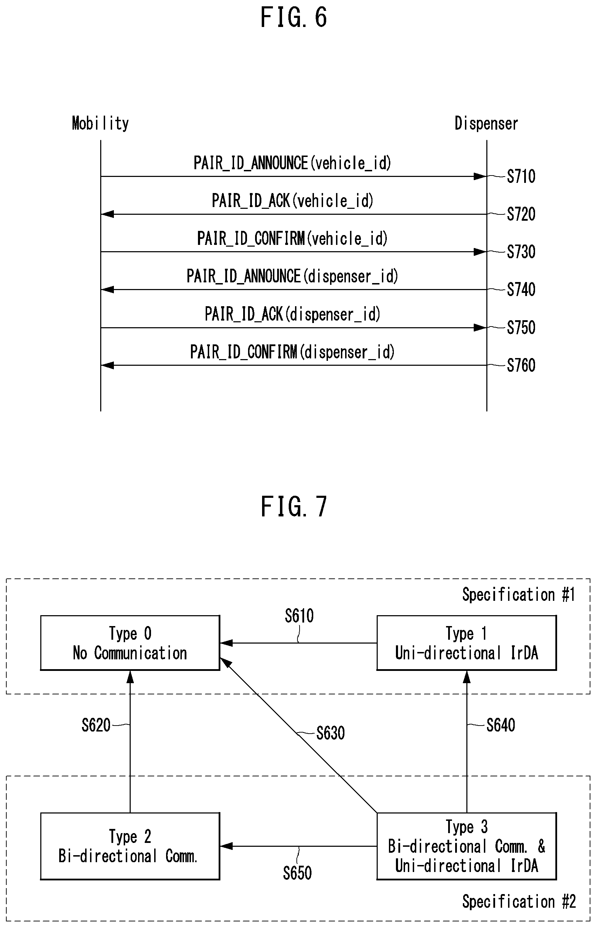

FIG. 6 is a sequence diagram illustrating the pairing process of the discovery and pairing procedure that may be employed in the bidirectional communication process for hydrogen fueling according to an exemplary embodiment of the present disclosure.

Referring to FIG. 6, in the pairing process, the vehicle and the dispenser may exchange pairing IDs with each other and discover the pairing ID of the counterpart during the pairing at UCDC level 2 and UCDC level 3.

For example, the vehicle may broadcast a message PAIR_ID_ANNOUNCE containing its pairing ID (PAIR_ID), i.e., a vehicle ID (vehicle_id) (S710). The dispenser may send a message PAIR_ID_ACK to the vehicle to acknowledge a receipt of the vehicle ID from the vehicle (S720). The vehicle may send a message PAIR_ID_CONFIRM to the dispenser to confirm a receipt of the ACK message from the vehicle (S730).

Next, the dispenser may broadcast a message PAIR_ID_ANNOUNCE containing its pairing ID, i.e., a dispenser ID (dispenser_id) (S740). The vehicle may send a message PAIR_ID_ACK to the dispenser to acknowledge a receipt of the dispenser ID from the dispenser (S750). The dispenser may send a message PAIR_ID_CONFIRM to the vehicle to confirm a receipt of the ACK message from the dispenser (S760).

Such a transmission-echo-verification method enables the vehicle and the dispenser to use session-specific randomized pairing IDs. This approach helps to solve a privacy issue related with the exchange of the pairing IDs. That is, trust in the pairing process may be established by a subsequent process, and for this purpose, the session-specific pairing IDs may be included in the data used to establish the trust.

Meanwhile, when supporting secure communications at a particular UCDC level, at least one of the vehicle and the dispenser may verify that the pairing provides sufficient information to secure the communication channel for all methods used to pair the vehicle and the dispenser. For example, the pairing may include an exchange of cryptographic keys so that the vehicle and the dispenser may secure communication during the fueling.

It is noted that, since the UCDC Level 1 does not support the bidirectional communication, the communication channel security may not be secured at the UCDC Level 1. Pairing the vehicle and the dispenser at the UCDC Level 2 and the UCDC Level 3 may be configured to provide sufficient information to secure the communication enough to satisfy a particular security level, e.g., IEC 62443 Security Level 3. The IEC 62443 Security Level 3 may be a security level for actors with adequate resources and adequate motivation.

FIG. 7 illustrates examples of a backward compatibility that may be employed in the bidirectional communication process for hydrogen fueling according to an exemplary embodiment of the present disclosure.

Referring to FIG. 7, the hydrogen fueling device may be designed to have the backward compatibility with existing devices in consideration of interoperability. The hydrogen fueling device or a communication device in the hydrogen fueling device may be classified into Type 0, Type 1, Type 2, and Type 3 based on the interoperability.

A Type 0 device may refer to a device that does not support the fueling communication or cannot receive a relevant communication message.

A Type 1 device may refer to a device that supports the IrDA communication for the fueling. The Type 1 device may fall back to a Type 0 device.

A Type 2 device may refer to a device that supports an advanced communication (AC). The Type 2 device may fall back to a Type 0 device.

A Type 3 device may refer to a device that supports the IrDA communication and the advanced communication. The Type 3 device may fall back to any of Type 0, Type 1, and Type 2 devices.

The advanced communication may refer to a communication using a certain protocol and a medium such as wireless local area network (WLAN), Bluetooth (BT), near field communication (NFC), WiFi, ultra-wideband (UWB), radio frequency identification (RFID), 4G, and 5G. In addition, the advanced communication may include bidirectional IrDA, serial communication, vehicle Ethernet (ETH), high level communication, and so on. The certain protocol may include transmission control protocol/internet protocol (TCT/IP), fueling protocol, and so on. The high level communication may process all information exceeding what is handled by command and control communications. The data link of the high level communication may use a power line communication (PLC), but the present disclosure is not limited thereto.

The advanced communication may include a hybrid form such as a combination of the IrDA communication and the wired communication and a combination of the IrDA communication and the wireless communication. The combination of the IrDA communication and the wired communication may require a modification in the nozzle and the receptacle.

That is, the advanced communication may be a wired or wireless bidirectional communication scheme, and wireless communication scheme may include various communication schemes such as 5G, WLAN, BLE, ETH, UWB, RFID, and NFC. A known protocol such as TCP/IP may be used as the communication protocol for the communication scheme. For example, the wireless communication scheme that may be considered may include Bluetooth, WLAN, WiFi (ISO 15118 for inductive / ACD), UWB (IEC limited consideration for ACD), or NFC.

In practice, the hydrogen fueling device may be implemented to support different communication schemes. Accordingly, the bidirectional communication process for hydrogen fueling according to the present embodiment may be configured to maximize the interoperability between the devices.

In other words, as shown in FIG. 7, when a Type 1 device supporting a specification #1 according to a certain standard meets a Type 0 device or a Type 2 device, the Type 1 device may fall back to the Type 0 (S610).

Also, when a Type 2 device supporting a specification #2 according to a certain standard meets a Type 0 device or a Type 1 device, the Type 2 device may fall back to the Type 0 (S620).

In addition, when a Type 3 device supporting the specification #2 meets a Type 0 device, the Type 3 device may fall back to the Type 0 (S630). When a Type 3 device meets a Type 1 device, the Type 3 device may fall back to the Type 1 (S640). When a Type 3 device meets a Type 2 device, the Type 3 device may fall back to the Type 2 (S650).

The aforementioned specification #1 may include a specification according to a Society of Automotive Engineers (SAE) standard. The specification #2 may include a specification according to ISO 19885-3 standard.

To support the interoperability described above, the hydrogen fueling device may perform a connection compatibility check. For example, the connection compatibility check may be performed according to Scenario 1 to Scenario 3 as follows depending on whether the WLAN which is one of the advanced communication schemes is supported by each of the devices.

In Scenario 1, the dispenser may be prepared with an access point (AP), i.e., a wireless router. The access point may beacon a signal so that the vehicle may access the fueling station and a vehicle supply equipment (VSE). An FCEV approaching the dispenser may scan and discover the dispenser, and may establish a WLAN link with the dispenser.

In Scenario 2, the dispenser does not support the bidirectional WLAN but supports a unidirectional IrDA. The dispenser corresponds to the Type 1 device. An FCEV approaching the dispenser, which is a Type 3 device, cannot scan and discover the dispenser which is a Type 1 device. When the nozzle attached to a cable of the dispenser is coupled to the receptacle of the FCEV, the IrDA communication may be initiated between the FCEV and the dispenser.

In Scenario 3, the dispenser may support the bidirectional WLAN communication and the unidirectional IrDA communication. In this case, the dispenser corresponds to the Type 3 device. The FCEV, which is a Type 1 device, may be parked near the dispenser. The dispenser cannot find any WLAN client yet. When the nozzle attached to a cable of the dispenser is coupled to the receptacle of the FCEV, the IrDA communication may be initiated between the FCEV and the dispenser.

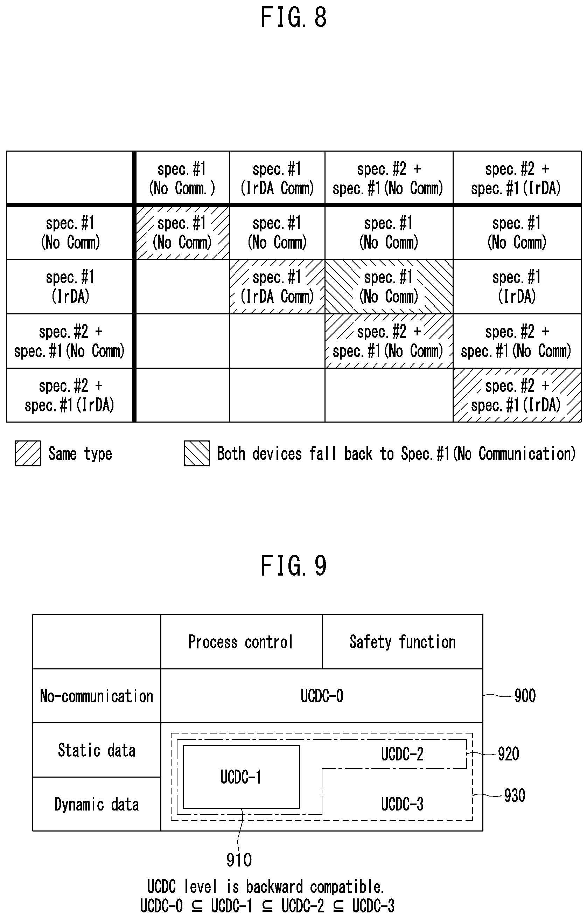

FIG. 8 is a table summarizing examples of backward compatibilities applicable in the bidirectional communication process for hydrogen fueling according to an exemplary embodiment of the present disclosure.

Referring to FIG. 8, the bidirectional communication process for hydrogen fueling according to the present embodiment may provide rules and principles of falling back in selecting the fueling method and the communication protocol to maximize the interoperability instead of selecting the communication schemes most preferred by the FCEV or the dispenser.

That is, when either the vehicle or the dispenser meets the other, the device with a relatively higher type or UCDC level may be configured to fall back to the type or level of a device with a relatively lower type or UCDC level.

For example, if the vehicle and the dispenser are of the same type or the same UCDC level, both devices may maintain their current type or UCDC level. On the other hand, if one device is a Type 1 device and the other device is a Type 2 device, both devices may be configured to fall back to Type 0. Meanwhile, if one device is a Type 3 device and the other device is not a Type 3 device, the Type 3 device may be configured to fall back to the type or UCDC level the same as those of the other device.

The aforementioned specification #1 may be a communication protocol according to the SAE standard, and the specification #2 may be a communication protocol according to the ISO 19885 standard.

Under the configuration described above, if the vehicle and the dispenser have common or the same implementations of the type as each other, the vehicle and the dispenser may select a type supported by both devices and which is the best one of the types. When a device having no communication capability (hereinbelow, referred to as "no-communication device" or "no-comm device") meets a device supporting the unidirectional communication (hereinbelow, referred to simply as "unidirectional communication device"), the latter may fall back to the no-communication device that does not support any communication scheme. When two devices supporting the bidirectional communication meets each other, the two devices may maintain the bidirectional communication scheme as it is. Here, the compatibility of the UCDC level may be handled separately. When a device meets a no-communication device, the device has to rely on the no-communication. Such rules may be applied to all devices supporting the bidirectional communication (hereinbelow, referred to simply as "bidirectional communication device").

In addition, when a unidirectional communication device meets a bidirectional communication device, the bidirectional communication device may fall back to the unidirectional communication scheme if the bidirectional communication device supports both the unidirectional communication scheme and the bidirectional communication scheme. When the bidirectional communication device does not support the unidirectional communication, the bidirectional communication device may fall back to the no-communication device to rely on the no-communication scheme.

The bidirectional communication device described above may be configured to support the fueling method based on the unidirectional communication regardless of whether the unidirectional communication capability is equipped or not. The bidirectional communication device needs to be able to check whether the counterpart device supports the bidirectional communication or not. If the counterpart FCEV or the dispenser does not support the bidirectional communication, the bidirectional communication device may fall back to the unidirectional communication device relying on the unidirectional communication scheme that may be compatible between the devices.

FIG. 9 illustrates use classifications of communication data (UCDC) applicable in the bidirectional communication process for hydrogen fueling according to an exemplary embodiment of the present disclosure and backward compatibilities in the use classifications of communication data.

As shown in FIG. 9, the vehicle and the dispenser may have respective pairing identities (IDs), and requirements for exchanging the IDs may be classified by the use classification of communication data (UCDC) level. The UCDC level may have UCDC level 1 (UCDC-1) 910, UCDC level 2 (UCDC-2) 920, and UCDC level 3 (UCDC-3) 930. The UCDC level may further include UCDC level 0 (UCDC-0) 900.

In case of the UCDC Level 0 (UCDC-0) 900, data is not communicated. Even if data is communicated, communicated data is not used for the fueling protocol for dispensing of hydrogen or in association with safety function. In the UCDC Level 0 (900), since no communication is performed between the vehicle and the dispenser, the dispenser cannot send the pairing ID to the vehicle during a process of process control or safety function.

When the pairing is attempted at the UCDC Level 1 (UCDC-1) 910, the vehicle may send the pairing ID to the dispenser. Although the data delivered at the UCDC Level 1 (UCDC-1) 910 is not used for the safety function, static data communicated may be used to improve the performance of the fueling protocol, and dynamic data communicated may be used to reduce a risk against process deviations during the fueling protocol.

The static data communicated at UCDC level 2 (UCDC-2) 920 can be used for the safety function. The static data of the UCDC level 2 (UCDC-2) 920 may be data added to the static data and the dynamic data defined for the UCDC level 1 for a permitted use.

The static data and dynamic data at the UCDC level 3 (UCDC-3) 930 may be used for a dynamic control of the protocol or for the safety function. The dynamic data of the UCDC level 3 (UCDC-3) 930 may be data added to the static data and the dynamic data defined for the UCDC level 2 for a permitted use.

As described above, the UCDC levels may have a structure in which functions and/or roles of the UCDC level 1 may be included in functions and/or roles of the UCDC level 2 and the functions and/or roles of the UCDC level 2 may be included in functions and/or roles of the UCDC level 3, i.e., functions and/or roles of a higher level may include functions and/or roles of a lower level. A device supporting a certain UCDC level can support a device of a lower UCDC level. Devices capable of supporting different UCDC levels may use a highest UCDC level supported by both devices. The aforementioned UCDC levels can also easily support the UCDC level 0. It can be seen that the UCDC levels are backward compatible. In another embodiment of the present disclosure, the backward compatibility may be effectively applicable to each of the no-communication scheme (Non-Comm), the unidirectional communication scheme (Uni-directional Comm), the bidirectional communication scheme (Bi-directional Comm), or their combinations regardless of the UCDC level.

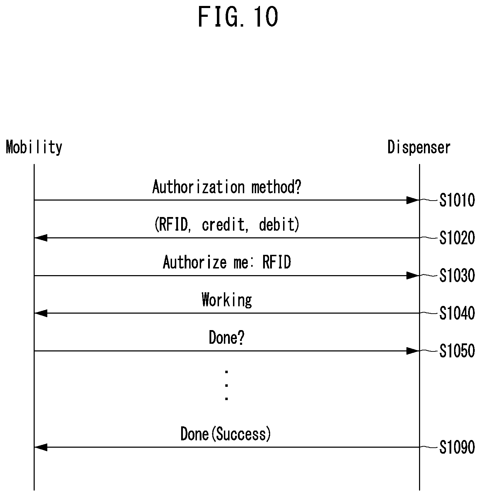

FIG. 10 is a sequence diagram illustrating an authorization process of a communication security procedure that may be employed in the bidirectional communication process for hydrogen fueling according to an exemplary embodiment of the present disclosure.

Referring to FIG. 10, the FCEV may request a list of authorization methods to the dispenser (S1010). The dispenser may send a response message to the request for the list of authorization methods to the FCEV (S1020). The response message may include a list of authorization methods related to a self-authorization or an external authorization such as the RFID, credit cards, or debit cards.

Next, the FCEV may send an authorization request message including an authorization method selected from the list of authorization methods such as the RFID to the dispenser (S1030). The dispenser may send a response message to the authorization request of the FCEV to the FCEV (S1040). The response message may include information indicating that the authorization for the authorization method selected by the FCEV is working.

Then, the FCEV may wait for a response containing an authorization result from the dispenser, and may send an authorization result request message (Done?) for the selected authorization method to the dispenser (S1050). If the authorization result is not received or the authorization is not completed, the operations S1010-S1050 may be repeatedly carried out. After the authorization is completed, the dispenser may send an authorization completion message ("Done (Success)") to the FCEV (S1090).

According to the process described above, the dispenser may verify whether the FCEV is authorized, i.e., whether the user of the FCEV has a right for the hydrogen fueling, before proceeding with the hydrogen fueling process.

To ensure the security of the authorization process, the hydrogen fueling device including at least one of the vehicle and the dispenser may establish a transport layer, i.e., a TCP connection, after the data link and physical layer connections are established between the vehicle and the dispenser, and then perform a TLS handshake to authenticate and exchange keys, thereby establishing a secure communication channel. During the exchange of critical information for security, user datagram protocol (UDP) communication protected by datagram transport layer security (DTLS) may be used.

In addition, the vehicle and the dispenser may perform the discovery and pairing procedure and establish a connection in the data link and physical layers. Then, credentials required for authentication and key exchange may be prepared. As a result, the communication channel between the vehicle and the dispenser may be encrypted and integrity-protected. The dispenser may authenticate the vehicle, and optionally, the vehicle may authenticate the dispenser.

Meanwhile, during the TLS handshake, the authentication of the vehicle may be mandatory while the authentication of the dispenser may be optional. In this case, the dispenser may act as a client and the vehicle may act as a server.

For the TLS handshake, the vehicle and the dispenser have to prepare necessary credentials. The vehicle and the dispenser may store and maintain a certificate chain, a private key corresponding to its certificate, and a certificate of a trust anchor in a secure storage for protecting against an unauthorized access.

During the TLS handshake, the vehicle may send the dispenser a predefined certificate request message to request a client authentication from the dispenser. After receiving the certificate request message, the dispenser may transmit a certificate and a certificate verification message to the vehicle to provide the certificate to the vehicle.

If the vehicle sends the certificate request message along with a handshake message such as ServerHello but the dispenser does not send a certificate verification message along with the certificate, the vehicle may terminate the TLS handshake by sending an alert message with a "Certificate_required" alert code.

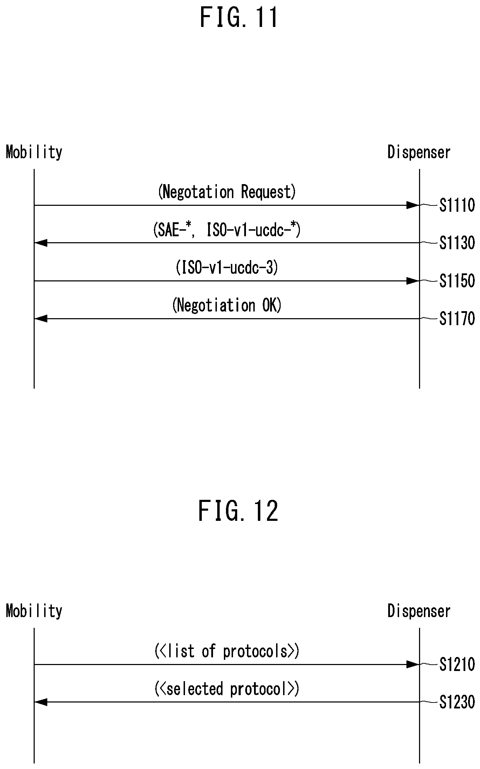

FIG. 11 is a sequence diagram illustrating a communication protocol negotiation procedure that may be employed in the bidirectional communication process for hydrogen fueling according to an exemplary embodiment of the present disclosure.

Referring to FIG. 11, in the communication protocol negotiation procedure, the FECV and dispenser may identify the protocol versions of the fueling protocols to be used in the bidirectional hydrogen fueling communication process. To initiate a protocol negotiation, the FCEV may send a negotiation request message to the dispenser (S1110).

Next, the dispenser may provide the FCEV with a response message containing a list of communication protocols supported by the dispenser as a response to the negotiation request message (S1130). The response message may include information on the communication protocols supported by the dispenser and based on SAE standards or ISO standards, for example. The SAE standards may include SAE J2601 standard, and the ISO standards may include ISO 19885-3 and ISO 19885-4 standards, for example.

Subsequently, the FCEV may select one protocol, e.g., the ISO-v1-ucdc-3 protocol, from the list of communication protocols supported by the dispenser, and send a protocol selection message including information on the selected communication protocol to the dispenser (S1150).

Then, the dispenser may discover the protocol included in the protocol selection message from the FCEV and send a negotiation OK message to the FCEV (S1170).

The communication protocol negotiation procedure described above is performed to identify a communication protocol for the vehicle and the dispenser to use in the hydrogen fueling session after discovering each other on a communication channel and performing the pairing. In particular, according to the present embodiment, the dispenser leads the procedure of exchanging the communication protocols and parameters with the vehicle.

The communication protocol negotiation procedure may be implemented for all available communication protocols to ensure a successful negotiation among different fueling protocols for each communication technology. For example, a fueling protocol using a communication technology such as WLAN may use a protocol commonly supported by the vehicle and the dispenser (hereinbelow, referred to as "common protocol ") to determine a communication protocol to be used in the bidirectional communication process for hydrogen fueling.

In an actual implementation, the may exist various combinations between the FCEV and the dispenser according to the hydrogen fueling communication standards, communication modes, fueling methods, communication levels, and other parameters. Here, the hydrogen fueling communication standards may include SAE J2601 series, ISO 19885-3, and ISO 19885-4 standards. The communication modes may include the no-communication, the IrDA, XYZ (ISO), and so on. The fueling methods may include a table-based fueling method such as a lookup table-based method, and an MC formula-based fueling method. The communication levels may include UCDC levels, and other parameters may include a pressure class, a category of a compressed hydrogen storage system (CHSS), hydrogen fueling tables, and so on.

Meanwhile, the vehicle or dispenser may be configured to perform falling back to a lower type or lower UCDC level according to the type and UCDC level of the counterpart device discovered during the communication protocol negotiation procedure.

In a variety of possible combinations of environments, if an incompatibility is identified in the parameters exchanged during the negotiation procedures for hydrogen fueling (e.g., in the use cases UC3-UC5), the vehicle and the dispenser may revert to the communication protocol negotiation procedure to perform the negotiation procedure again.

FIG. 12 is a sequence diagram illustrating a communication protocol negotiation procedure that may be employed in the bidirectional communication process for hydrogen fueling according to another embodiment of the present disclosure.

Referring to FIG. 12, during the communication protocol negotiation procedure, the FCEV may send a request message, to the dispenser, including a list of communication protocols to which priorities are assigned (S1210). Examples of the communication protocols to which the priorities are assigned are shown in Table 2.

The dispenser may send a response message, to the FCEV, including a certain protocol, i.e., a selected protocol, selected from the list of protocols (S1230). The selected protocol selected by the dispenser may be a common protocol supported by both the dispenser and the vehicle and having a highest priority and most preferred by the vehicle, e.g., ISO 19885-3-2023-UCDC-3 protocol in the example of Table 2.

The common protocol may be a result of an agreement between the vehicle and the dispenser on the communication protocol to be used for the fueling communication.

Meanwhile, the vehicle may prioritize the communication protocols which the vehicle supports. The vehicle may include FCEV. The vehicle may provide the prioritized communication protocols to the dispenser. Examples of the prioritized communication protocols are as shown in Table 2.

**[Table 2]**

| Protocol ID | Priority |
|---|---|
| SAE J2601 - No comm. | 7 |
| SAE J2799 - IrDA | 6 |
| SAE J2601 - IrDA | 5 |
| ISO 19885-3-2023-UCDC-0 | 4 |
| ISO 19885-3-2023-UCDC-1 | 3 |
| ISO 19885-3-2023-UCDC-2 | 2 |
| ISO 19885-3-2023-UCDC-3 | 1 |

After the communication protocol is selected in the communication protocol negotiation use case UC3, the vehicle and the dispenser may activate their communication protocol implementations and initiate the fueling protocol negotiation. The fueling protocol negotiation is a procedure in which the vehicle and the dispenser find and agree on a fueling protocol to be used for the fueling session. In this operation, the vehicle and the dispenser may select the communication protocol that the vehicle most prefers among the protocols supported by both the vehicle and the dispenser.

A communication protocol negotiation method for the hydrogen fueling according to an exemplary embodiment of the present disclosure, which is performed by a communication controller of the hydrogen fueled mobility 100, may include: an operation S1210 of transmitting, to a communication entity related to the dispenser 200, a first message including a list of at least one first fueling protocol supported by the hydrogen fueled mobility and at least one first communication protocol required for the at least one first fueling protocol; and an operation S 1230 of receiving, from the communication entity related to the dispenser 200, a response message including a second fueling protocol determined (selected) from the at least one first fueling protocol.

The communication entity related to the dispenser 200 may be the electronic controller 210 of the dispenser 200 or may be a separate communication device/apparatus mounted on the dispenser 200. Alternatively, an electronic controller or a separate communication device/apparatus in the fueling station system 220 may communicate with the vehicle/mobility 100 in place of the dispenser 200.

The first message may include priority information based on a preference of the hydrogen fueled mobility 100 as shown in Table 2.

The response message may include the second fueling protocol determined (selected) from the at least one first fueling protocol based on the priority information based on the preference. The mobility 100 side or the dispenser 200 side, alone or in cooperation with each other, may determine (select) the second fueling protocol based on priority information based on preference. An operation of finally sending an approval (or confirmation) message to the other party to complete the protocol negotiation process may be performed by the mobility 100 side, but may also be performed by the dispenser 200 side, alternatively.

The response message may include the second fueling protocol determined (selected) from at least one common protocol candidate commonly included in the at least one first fueling protocol and at least one fueling protocol supported by the dispenser 200.

In the exemplary embodiment shown in FIG. 12, the response message may include the second fueling protocol determined (selected) from the at least one first fueling protocol by the controller of the dispenser 200.

The response message may include a second communication protocol required for the second fueling protocol determined by the controller of the dispenser 200.

The response message may include the second communication protocol determined (selected) from the at least one second communication protocol candidate required for the second fueling protocol by the controller of the dispenser 200.

The response message may include the second communication protocol determined, by the controller of the dispenser 200, from a plurality of communication protocols required for the second fueling protocol according to a fallback device type determined based on the interoperability and/or the backward compatibility between the hydrogen fueled mobility 100 and the dispenser 200.

Referring to FIGS. 11 and 12 together, according to the communication protocol negotiation method for the hydrogen fueling according to an exemplary embodiment of the present disclosure, a negotiation request message for a negotiation of the hydrogen fueling communication protocol between the hydrogen fueled mobility 100 and the dispenser 200 may be initially transmitted by the communication controller of the hydrogen fueled mobility 100 to the communication entity related to the dispenser 200.

The communication protocol negotiation method for the hydrogen fueling according to an exemplary embodiment of the present disclosure may further include an operation of transmitting a confirmation message in response to the response message by the communication controller of the hydrogen fueled mobility 100 to proceed with the negotiation, when the response message is accepted as a response to the negotiation request message.

In the operation S1210 of transmitting the first message, the first message may be transmitted to the communication entity related to the dispenser 200 as the negotiation request message.

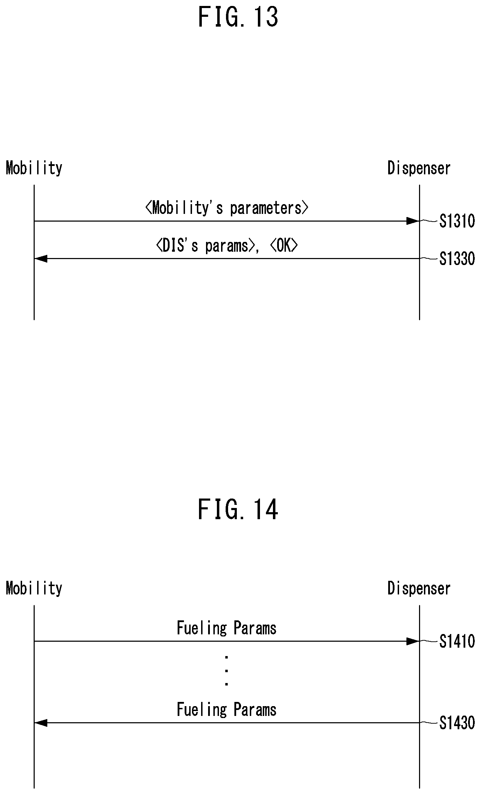

FIG. 13 is a sequence diagram illustrating a fueling parameter exchange/negotiation procedure that may be employed in the bidirectional communication process for hydrogen fueling according to an exemplary embodiment of the present disclosure.

The fueling protocol negotiation procedure may include operations in which the mobility or the dispenser exchanges detailed parameters required for the fueling protocol. The mobility may include the FCEV.

Referring to FIG. 13, in the fueling protocol exchange/negotiation procedure, the FCEV may provide the dispenser with a first parameters (i.e., FCEV's parameters) supported by the RCEV (S1310).

The first parameters may include parameters for supporting fueling method compatibility, parameters related to physical characteristics, monitoring parameters, and parameters related to acceptance.

The compatibility related parameters may include a pressure class and a CHSS category. The physical characteristics related parameters may include a maximum allowed CHSS pressure, a maximum allowed CHSS temperature, a maximum allowed flow, and a CHSS volume. The monitoring parameters may include a current CHSS pressure and a current CHSS temperature. The acceptance related parameters may include information indicating whether it is accepted or not, i.e., a parameter indicating yes (true) or no (false). Each of the parameters described above may include information corresponding to one of predefined levels or settings as well as information regarding a same or different main UCDC level.

Meanwhile, the dispenser may send information of second parameters (i.e., Dispenser's parameters) supported by the dispenser and an OK message indicating a receipt of the first parameters to the FCEV (S1330). At this time, in case that the parameter exchange process shown in FIG. 13 and the protocol negotiation process shown in FIG. 12 are linked to each other, the dispenser may send the FCEV a response message including the information of the selected protocol among the first parameters by using the OK message shown in the operation S1330 in FIG. 3.

The second parameters related to the fueling protocol exchange/negotiation may include parameters for supporting fueling method compatibility, parameters related to physical characteristics, fueling target parameters, monitoring parameters, and parameters related to acceptance.

The compatibility related parameters may include a fueling delivery temperature and a selected fueling table. The physical characteristics related parameters may include a maximum fuel delivery pressure, a maximum fuel delivery temperature, a minimum fuel delivery temperature, and a maximum fuel delivery flow rate. The fueling target parameters may include a target SOC, a target final CHSS pressure, a target final CHSS temperature, a target APR, and a target or expected fueling duration. The monitoring parameters may include a current fuel delivery temperature and an ambient temperature. The acceptance related parameters may include information indicating whether it is accepted or not. Each of the parameters described above may include information corresponding to one of predefined levels or settings as well as information regarding a same or different main UCDC level.

The FCEV may provide the dispenser with the parameters listed in the form of a table. The listed parameters may include FCEV parameters compatible with the UCDC level negotiated in the fueling protocol negotiation procedure.

The dispenser may send a response message including information of the second parameters supported by the dispenser and information of selected parameters among the first parameters ('<OK>' in FIG. 13) to the FCEV (S1330).

In addition, the second parameters related to the fueling protocol may be expressed in another form shown in Table 3.

**[Table 3]**

| Index | Name | Revision | Sub-protocol | Reference |
|---|---|---|---|---|
| 1 | PRHYDE | 2023 | TYPE3-T-initial | 4 |
| 2 | PRHYDE | 2024 | TYPE3-T-Special | 3 |
| 3 | RTR-HFP | | | 2 |
| 4 | ANN-MPC | | | 5 |
| 5 | HMC-FAST | 1.0 | | 1 |

As shown in Table 3, the dispenser may provide parameter information in the form of a table, which includes a name, a revision date or year or a version, information on whether a sub-protocol is available, and reference information such as a priority, for the fueling method or fueling protocol supported by the dispenser.

Similarly to the vehicle, the dispenser may take the lead in exchanging the communication protocols and parameters with the vehicle, or may be configured to assign priorities to the communication protocols supported by the dispenser to provide the vehicle with the information of the prioritized communication protocols.

In Table 3, PRHYDE (PROtocol for heavy-duty HYDrogEn refueling) was proposed by one of the European projects having developed heavy-duty vehicle hydrogen refueling protocols, RTR-HFP stands for Real-Time Responding Hydrogen Fueling Protocol and was proposed as a type of protocol concept for improving a refueling efficiency based on real-time communications, and ANN-MPC was proposed as a type of protocol concept of collecting and analyzing data from fueling situations and applying a predictive control to the fueling situations.

Examples of information on the selection of protocols related to the fueling protocol that may be sent by the dispenser to the FCEV are shown in Tables 4 and 5.

**[Table 4]**

| Fueling Protocol ID | ResultCode |
|---|---|
| 2 | OK |

As shown in Table 4, the dispenser may select a fueling protocol corresponding to an index of 2 and send a response message including a result code of OK to the FCEV.

**[Table 5]**

| Fueling Protocol ID | ResultCode |
|---|---|
| | FAIL_NO_COMMON_PROTOCOL |

As shown in Table 5, when the dispenser fails to find a compatible protocol in the list of fueling protocols supported by the FCEV received from the FCEV, the dispenser may send a response message containing information indicating that there is no common protocol (e.g., FAIL_NO_COMMON_PROTOCOL) in a result code field to the FCEV.

As mentioned above, after the communication link is established and the communication protocol is selected in the protocol negotiation phase, the FCEV and the dispenser may exchange various parameters to determine whether they can perform a compatible fueling procedure. Here, the information required to perform a safe and efficient fueling procedure may include the compatibility related parameters, the physical characteristics related parameters, the fueling target parameters, and the monitoring parameters.

The compatibility related parameters may include the fueling protocol category and the fuel delivery temperature. The physical characteristics related parameters may include the CHSS pressure and the maximum allowed flow. The fueling target parameters may include the target SOC and the target CHSS pressure. The monitoring parameters may include the current CHSS temperature and the ambient temperature.

In case that no compatible parameters can be found and the fueling cannot proceed, the FCEV may return to the communication protocol negotiation procedure to attempt to negotiate another protocol or to stop fueling to the dispenser. In the communication protocol negotiation procedure after the failure of the fueling parameter exchange, the FCEV may propose a set of supported protocols to the dispenser excluding the protocols that failed in the fueling parameter exchange procedure.

After the fueling protocol is negotiated in the use case UC-4 described above, the vehicle and the dispenser may negotiate specific parameters for the fueling protocol, notify static or dynamic states, and exchange detailed fueling parameters to determine the fueling targets. In case that the fueling parameter negotiation fails due to the incompatibility of the parameters, the dispenser and the FCEV may return to the use case UC-3 to select another fueling protocol or return to the use case UC-1 to select another communication protocol. If the use cases UC-3 and UC-1 are not performed normally, the dispenser and the FCEV may terminate the current communication.

According to the above configuration, some fueling protocols may be performed on a no-communication scheme basis. Another fueling protocols may require the unidirectional IrDA communication. Another fueling protocols may require the bidirectional communication. Another fueling protocols may require both the bidirectional communication and the unidirectional IrDA communication.

Some fueling protocols may require a predetermined UCDC level or a higher UCDC level. At least one fueling protocol may be proposed based on the category or type of the hydrogen fuel cell vehicle and the category or type of the dispenser. The proposed fueling protocols may be assigned with different priorities. The communication protocol and the fueling protocol between the hydrogen fuel cell vehicle and the dispenser may be finally determined based on whether the communication protocol required by the fueling protocol is supported by the hydrogen fuel cell vehicle and/or the dispenser and taking into the priorities of the proposed fueling protocols.

FIG. 14 is a sequence diagram illustrating a fueling parameter exchange/negotiation procedure that may be employed in the bidirectional communication process for hydrogen fueling according to an exemplary embodiment of the present disclosure.

As shown in FIG. 14, the vehicle and the dispenser can determine detailed parameters required to perform the selected fueling protocol with a desired level of safety and performance. When selection of the fueling protocol is completed according to the fueling protocol negotiation procedure, the vehicle and the dispenser may exchange detailed parameters to be exchanged before performing the fueling protocol. In detail, after the FCEV sends values of the fueling parameters to the dispenser (S1410) and the dispenser responds with its own parameter values (S1430), the fueling parameter negotiation begins. During the parameter exchange, the vehicle and the dispenser may determine whether the vehicle and the dispenser can perform the fueling protocol or not.

During the fueling parameter negotiation, the FCEV and the dispenser may exchange the parameters, at least once until an agreement is reached, for each protocol required to properly and efficiently refuel the FCEV while maintaining the hydrogen fueling system in a safe state. The receiver receiving the parameters from a sender may send a response message indicating the receipt of parameters to the sender. The acceptance of parameters may be indicated as true in an acceptance field while a negative acceptance may be indicated as pending or false in the acceptance field.

After receiving the fueling protocol negotiation response message from the dispenser, the FCEV may transmit the fueling protocol negotiation response message within a prescribed message processing time to provide the dispenser with the fueling parameters to be set.

Examples of the parameters sent by the FCEV are shown in Table 6.

**[Table 6]**

| Name | Unit | Precision | Range/Values | Type | Semantics |
|---|---|---|---|---|---|
| Pressure Class | N/A | N/A | {H35, H70} | Static | Pressure class of the tank |
| CHSS Volume | Liter | 2 decimals | Positive, No-max | Static | Volume of the tank |
| CHSS Pressure | MPa | 2 decimals | Positive, No-max | Dynamic | Current pressure of the tank |
| Emergency Policy | N/A | N/A | {Terminate, Fallback} | Static | Emergency handling policy |

Examples of the parameters sent by the dispenser are shown in Table 7.

**[Table 7]**

| Name | Unit | Precision | Range/Values | Type | Semantics |
|---|---|---|---|---|---|
| Fueling Delivery Temperature | N/A | N/A | {H35, H70} | Static | ... |
| Fueling Temperature | MPa | 2 decimals | Positive, No-max | Dynamic | Current pressure of the tank |
| Emergency Policy | N/A | N/A | {Terminate, Fallback} | Static | Emergency handling policy |

As described above, in the fueling parameter negotiation procedure, the FCEV may send a message containing a range or values of a third fueling parameters supported by the FCEV to the dispenser (S1410).

The third parameters may include physical characteristic related parameters, monitoring parameters, safety policy related parameters, and the acceptance related parameters.

The compatibility related parameters may include a receptacle type, a pressure class, a CHSS category, a CHSS type, a CHSS capacity, a maximum allowed CHSS pressure, a maximum allowed CHSS temperature, and a maximum allowed flow. The monitoring parameters may include a current CHSS pressure and a current CHSS temperature. The safety policy related parameters may include an emergency policy and a safety enforcement level. The acceptance related parameters may include information indicating whether it is accepted or not, i.e., a parameter indicating yes (true), no (false), or pending.

Meanwhile, the dispenser may send a message containing a range or values of a fourth fueling parameters supported by the dispenser to the FCEV (S1410).

The fourth parameters related to the fueling parameter negotiation may include physical characteristic related parameters, monitoring parameters, fueling target parameters, safety policy related parameters, and the acceptance related parameters.

The physical characteristics related parameters may include the maximum fuel delivery pressure, the maximum fuel delivery temperature, the minimum fuel delivery temperature, and the maximum fuel delivery flow rate. The monitoring parameters may include the current fuel delivery temperature and the ambient temperature. The fueling target parameters may include the selected fueling table, the target SOC, a target final CHSS pressure, a target final CHSS temperature, a target APR, and a target or expected fueling duration. The acceptance related parameters may include information indicating whether it is accepted or not. Each of the parameters described above may include information corresponding to one of predefined levels or settings as well as information regarding a same or different main UCDC level.

The FCEV may provide the dispenser with the parameters listed in the form of a table. The listed parameters may include FCEV parameters compatible with the UCDC level negotiated in the fueling protocol negotiation procedure.

Meanwhile, if the fueling parameter negotiation request message is received and the received fueling parameters are compatible with the dispenser, the dispenser may respond to the request message with its own fueling parameters by transmitting a fueling parameter negotiation response message with a negotiation result set to "OK" to the FCEV within a prescribed message response time interval.

If the fueling parameter negotiation request message is received but the received fueling parameters are not compatible with the dispenser, the dispenser may respond to the request message by transmitting a fueling parameter negotiation response message with a negotiation result set to "fail" to the FCEV to indicate the incompatibility with the vehicle, the FCEV. The negotiation result may indicate a value or information contained in the result code field, and the failure may represent a negation failure at a specific time and may be expressed by an indication of the incompatibility, e.g., 'Fail_incompat'.

Meanwhile, if the FCEV receives the fueling parameter negotiation request message but finds that the received fueling parameters are not compatible with the FCEV, the FCEV may notify the incompatibility to the dispenser by transmitting an error notification message with a "reason" set to a predefined error code.

On the other hand, before starting the fuel delivery, the vehicle and the dispenser may verify that all safety conditions are met through the use case UC6 for safety check-in. This operation may be optional, but it is desirable to define a dedicated safety check-in procedure in the fueling protocol to ensure a desired level of safety in a precise and explicit manner.

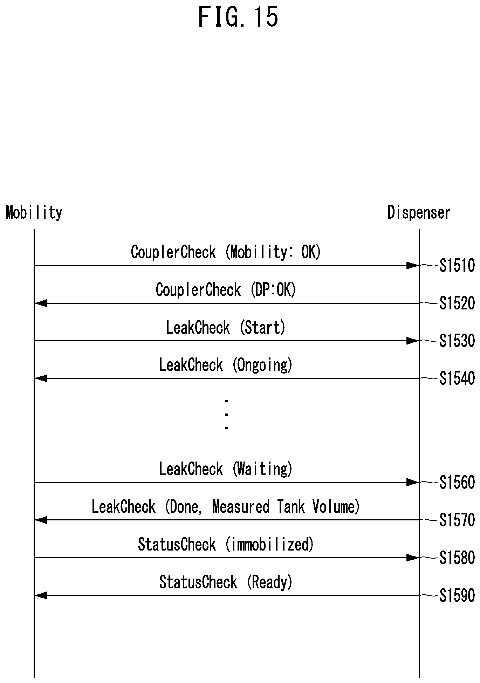

FIG. 15 is a sequence diagram illustrating a safety check-in procedure that may be employed in the bidirectional communication process for hydrogen fueling according to an exemplary embodiment of the present disclosure.

In the safety check-in procedure, the dispenser and the vehicle including the FCEV may check whether all necessary safety conditions are satisfied before the actual fueling starts.

After the fueling parameters are exchanged and the vehicle and the dispenser are considered compatible, the vehicle and the dispenser may perform a safety status check to determine whether the fueling may be performed safely. Depending on the fueling protocol, the safety check may be performed implicitly within the protocol. Further, the safety check-in procedure may be omitted depending on the implementation.

During the safety check-in procedure, the vehicle and/or the dispenser may check whether an engagement of the nozzle and receptacle is locked, check whether there is any leak, and check a last-minute status.

In case that the vehicle have received the fueling parameter negotiation response message from the dispenser and the fueling protocol supports the safe check-in, the vehicle may initiate a safe check-in procedure by transmitting a safe check-in request message to the dispenser within a message sequence setting time interval.

In detail, as shown in FIG. 15, the vehicle and the dispenser may exchange messages for coupler check (S1510 and S1520). The vehicle may send a message including information indicating its own coupler check result (e.g., "FCEV:OK") to the dispenser, and the dispenser may send a message including information indicating its own coupler check result (e.g., DP:OK) to the vehicle.

The vehicle and the dispenser may exchange messages related to a gas leakage check (S1530 and S1570). During the exchange of the messages related to the gas leakage check, the dispenser may send information indicating that the leakage check is in progress ("Ongoing") to the vehicle (S1540). Also, the vehicle may send information indicating that the vehicle is waiting for a leakage check result from the dispenser ("waiting") to the dispenser (S1560). When the leakage check is completed, the dispenser may send a message requesting a measured tank volume together with information indicating that the leakage check is completed ("Done") to the vehicle (S1570).

The dispenser may send a message for immobilized status check to the vehicle (S1580), and the vehicle may send a message indicating that it is ready for the status check to the dispenser (S1590).

If the vehicle reports parameters on the current status or immobilized status of the vehicle to the dispenser, the dispenser may report parameters on a coupler lock status, a leakage check status, and a predicted FCEV tank capacity to the vehicle.

After the safety check-in procedure described above is completed, the actual fueling may start. During the fueling, the vehicle and the dispenser may exchange information for monitoring various status parameters to ensure that the fueling is performed safely and efficiently. If necessary, the vehicle or the dispenser may send a control message requesting an action from the other party to control the fueling procedure or to respond to a safety-related condition. The parameters to be exchanged and commands may vary depending on the actual fueling protocol.

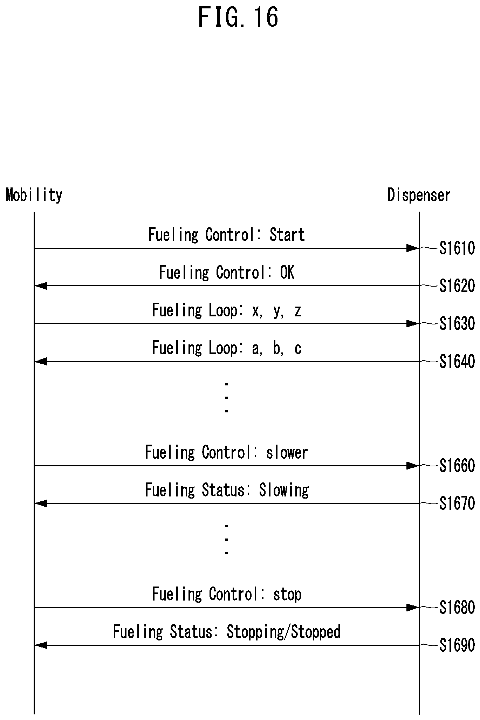

FIG. 16 is a sequence diagram illustrating a monitoring and control procedure that may be employed in the bidirectional communication process for hydrogen fueling according to an exemplary embodiment of the present disclosure.

In the monitoring and control procedure, the dispenser and/or the vehicle including the FCEV may monitor the fueling status and control the fueling process if necessary. The vehicle and the dispenser may proceed with the fueling process according to the selected fueling protocol and using the parameters while all safety checks are confirmed. During the fueling, the vehicle and the dispenser may exchange various measurement data to determine the fueling status and detect safety-critical incidents as quickly as possible.

In addition, the vehicle may send certain commands to the dispenser to control the fueling procedure such as the start or the termination of the fueling. At this time, the vehicle may use UDP with DTLS for the communication to support black channel communication. The black channel communication may refer to a communication that applies a black channel principle ensuring a secure communication despite the output characteristics of the communication channel which may be unsecure or has a property unrelated to an application.

To be more specific, as shown in FIG. 16, the vehicle may send a message to a dispenser to start the fueling control (S1610), and in response, the dispenser may send a message including a confirmation (e.g., "OK") to the vehicle (S1620).

In addition, the vehicle may send a message including information of its own fueling loop (e.g., x, y, z) to the dispenser (S1630), and the dispenser may send a message including information of its own fueling loop (e.g., a, b, c) corresponding to the vehicle's fueling loop to the vehicle (S1640).

Additionally, the vehicle may send a fueling control request message, to the dispenser, including information for slowing down the fueling or reduce the amount of delivered fuel (S1660), and the dispenser may send a response message including information indicating a slowing in the fueling flow to the vehicle (S1670).

In addition, the vehicle may send a fueling control request message to request a stop of the fueling to the dispenser (S1680). The dispenser may send a fueling status response message including information that fueling is stopped or has been stopped to the vehicle (S1690).

According to the monitoring and control procedure, the vehicle and the dispenser may exchange the parameters related to the fueling status continuously or periodically. The vehicle may send information such as the current tank temperature, the current tank pressure, and so on to the dispenser, and the dispenser may provide the vehicle with parameters related to the start, stop, ramping up, or ramping down of the fueling, the current injection pressure, a fueling plan, and so on.

The message sent by the vehicle to the dispenser regarding a fueling control request may include information or parameters related to the start, pause, resume, and termination of the fueling. In addition, a message related to a report sent by the vehicle to the dispenser may include information or parameters such as current tank temperature and the current tank pressure.

The message sent by the dispenser to the vehicle regarding the report may include information or parameters related to the status information, the current ambient temperature, a current pressure ramp rate (PRR), a delivery fuel flow rate, a current fuel delivery temperature, a pre-cooling temperature, a current fuel delivery pressure, whether a full fueling is in use, whether a cooling dispenser is in use, whether the fallback is in use, a reason for a fueling stop, a current amount of hydrogen delivered, for example.

A message related to a target parameter update sent by the dispenser to the vehicle may include the target final tank pressure, the target final tank temperature, the target fueling APR, the target SOC, the current SOC, and the estimated remaining duration.

Meanwhile, when TCP is used in the monitoring and control procedure, if the safety check-in response message or the safety check-in procedure according to the fueling protocol is omitted, the vehicle may transmit a fueling loop request message to the dispenser within the message sequence setting time interval after receiving the fueling parameter negotiation response message from the dispenser. The request message or response message related to the fueling loop may be transmitted through a DTLS message.

After completing the hydrogen fueling through the monitoring and control procedure, before terminating the session and detaching the nozzle from the vehicle, the vehicle and the dispenser may check whether the vehicle and the dispenser satisfies all safety conditions through the safety check-out use case. The safety check-in procedure may be optional, but it is desirable to define a dedicated safety check-in procedure in the fueling protocol to ensure a desired level of safety in a precise and explicit manner.

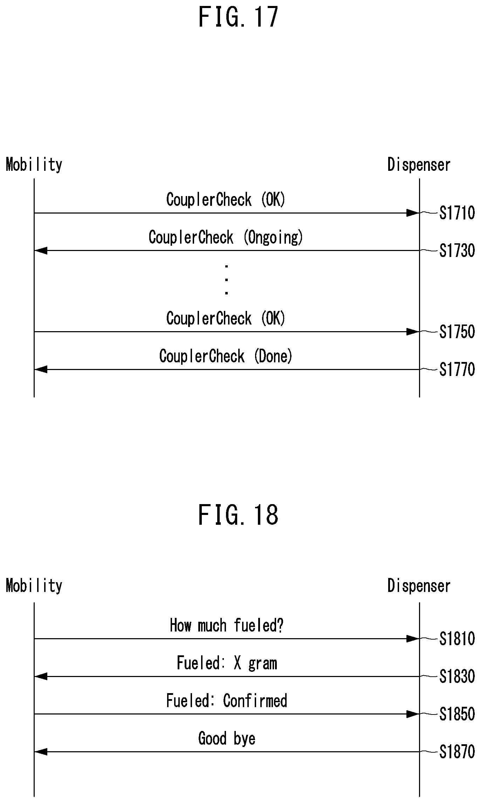

FIG. 17 is a sequence diagram illustrating a safety check-out procedure that may be employed in the bidirectional communication process for hydrogen fueling according to an exemplary embodiment of the present disclosure.

The vehicle and the dispenser may check that all necessary safety conditions are satisfied before the nozzle of the dispenser is disconnected from the receptacle of the vehicle through the safety check-out procedure. In other words, the vehicle and the dispenser may verify that it is absolutely safe for a user or operator to disconnect the nozzle from the vehicle after the fueling is completed.

For example, if the vehicle receives the fueling loop response message from the dispenser with a "Result" attribute set to "OK" or a "Status" attribute set to "finished", or the vehicle receives the fueling status response message including information that fueling is stopped, and if the hydrogen fueling protocol supports the safety check-out, the vehicle may initiate the safety check-out and perform the safety check-out procedure by transmitting a safety check-out request message to the dispenser within a message sequence setting time period.

The vehicle and the dispenser may repeatedly report their status to each other until the safety checks are verified. If the bidirectional communication process for hydrogen fueling does not require such safety checks at the end, the use case for the safety check-out may be omitted.

To be more specific, as shown in FIG. 17, the vehicle may send a message containing information on a coupler check result (e.g., "OK") to the dispenser (S 1710), and the dispenser may send a message containing information indicating that the coupler check is in progress (e.g., "Ongoing") to the vehicle (S1730).

In addition, the vehicle may send again a message containing information on the coupler check result (e.g., "OK") to the dispenser (S1750), and the dispenser may send a message containing information indicating that the coupler check is completed (e.g., "Done") to the vehicle (S1770).

When the coupler check result shows that the coupler check was completed normally, the nozzle of the dispenser may be separated from the receptacle of the vehicle by the user or operator.

In the safe check-out procedure, the reporting message sent by the dispenser to the vehicle may include information or parameters about a coupler unlock status. The coupler unlock status information may include information of locked, unlocked, icing, or problems.

When the fueling according to the hydrogen fueling protocol is completed and the nozzle is safely separated, or when a safety-uncritical problem occurred during another use case, the termination use case UC9 may be performed.

FIG. 18 is a sequence diagram illustrating a termination procedure that may be employed in the bidirectional communication process for hydrogen fueling according to an exemplary embodiment of the present disclosure.

In the termination procedure which is the final stage of fueling, the vehicle and the dispenser may exchange information on the fueling result regarding the fueling performance and method and/or information on the reason for an unexpected stopping of the fueling to complete all procedures for hydrogen fueling. The termination use case may also be configured to handle tasks related to the safety-uncritical issues when they occur.

For example, after the vehicle receives the safety check-out response message from the dispenser with a "Result" attribute set to "DONE" or the fueling loop response message with the "Status" attribute set to "Finished" or including information that fueling is stopped, the vehicle may transmit a termination request message to the dispenser to perform the termination procedure.

For example, as shown in FIG. 18, the vehicle may send a message to a dispenser to query how much fueling has been fueled from the dispenser (S1810). The dispenser may send a response message including information on the amount of hydrogen fueled (e.g., X gram) in response to the query message to the vehicle (S1830).

Subsequently, the vehicle may send a confirmation request message for a completion of the fueling to the dispenser (S1850), and the dispenser may send a good-bye message to the vehicle as a response message to the confirmation request message (S1870).

After the fueling is completed and the safety check is performed, the vehicle and the dispenser may exchange at least some of book-keeping information for a fueling session of hydrogen fueling in the termination procedure. The vehicle and dispenser may exchange summary information on the hydrogen fueling session before completing the termination procedure.

The book-keeping information may include all information related to the hydrogen fueling recorded in the vehicle or the dispenser according to prescribed rules or policies throughout all fueling sessions for the hydrogen fueling and prior to completing the termination procedure of the use case UC-9.

The book-keeping information or the summary information may include information on how much fuel was dispensed and what report was generated. In addition, the reporting message transmitted by the vehicle to the dispenser may include information or parameters related to the current tank temperature and the current tank pressure. Meanwhile, the reporting message transmitted by the dispenser to the vehicle may include information on the final SOC, the final average fueling rate (APR), the final measured tank pressure, the actual fueling time, and the actual amount of the hydrogen fueled.

When all necessary information for the fueling session is stored, the fueling session may be completely terminated.

Examples of communication data exchanged in some of the use cases UC5-UC9 are summarized in Table 8.

**[Table 8]**

| UC | From Dispenser to Vehicle | From Vehicle to Dispenser |
|---|---|---|
| Fueling Parameter Negotiation | Communication capability | Communication capability |
| | Fueling protocol | Maximum pressure |
| | Fueling (cooling) temperature | Maximum temperature |
| | Target fueling pressure | Maximum flow rate |
| | Target expected tank temperature after fueling | Tank temperature |
| | | Tank pressure |
| | Target fueling amount (SOC %) | Tank volume |
| | Target fueling time | Fueling pressure (e.g., 350, 700) |
| | Ambient temperature | |
| Safety Check-in | Nozzle-receptacle coupling status | Tank temperature |
| | CHSS leakage check result | Tank pressure |
| | Vehicle tank volume predicted by fueling station | Tank volume |
| | | |
| | (Check suitability of usage) | |
| Monitoring and Control | Fueling (cooling) temperature | Tank temperature |
| | Target fueling pressure | Tank pressure |
| | Target expected tank temperature after fueling | Tank volume |
| | | Fueling stop request |
| | Target fueling amount (SOC %) | |
| | Ambient temperature | |
| | Target fueling rate | |
| | Actual fueling rate | |
| | Target fueling time | |
| | Actual fueling time | |
| | Fueling flow rate | |
| | Fueling status (start/fueling/stop/pause) | |
| | Communication status | |
| | Reason for fueling stop | |
| | (Normal termination/low pressure at fueling station/communication error) | |
| | | |
| | Whether full (top-off) or not | |
| | Whether cold dispenser or not | |
| | Whether fallback is to be performed | |
| Safety Check-out | Nozzle-receptacle separability (separable/icing) | Tank temperature |
| | | Tank pressure |
| | | Tank volume |
| Termination | Target fueling amount | |
| | Actual fueling amount | |
| | Target fueling rate | |
| | Actual fueling rate | |
| | Target fueling pressure | |
| | Actual fueling pressure | |
| | Target tank temperature | |
| | Actual tank temperature | |
| | Target fueling time | |
| | Actual fueling time | |

Meanwhile, the error handling use case UC10 is a functional block for handling a situation in which a security-uncritical error occurs because of a shutdown of the fueling procedure similar to a normal termination or a sudden interruption of the communication.

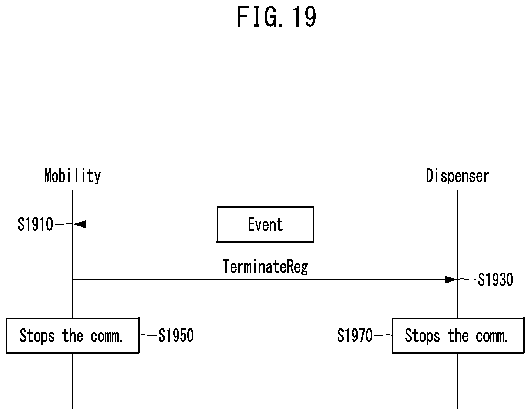

FIG. 19 is a sequence diagram illustrating an error handling procedure that may be employed in the bidirectional communication process for hydrogen fueling according to an exemplary embodiment of the present disclosure.

The error handling procedure may include a definition of an error condition related to the fueling protocol, provision of a detection criterion, and a responding procedure including a notification, the termination procedure, and the fallback mechanism when an error occurs.

Referring to FIG. 19, the error handling procedure may be applicable when a safety-uncritical error occurs and further communication is impossible. According to the error handling procedure, the vehicle and the dispenser may handle the occurrence of the safety-uncritical error at any time during the fueling. When the safety-uncritical error occurs, the vehicle and the dispenser may immediately stop the fueling, temporarily stop the use case previously selected and currently being operated, and then proceed with the termination use case UC9.

If the vehicle detects an event related to the safety-uncritical error (S1910), the vehicle may notify the dispenser of the termination reason through a termination request message (S1930) and stop the current fueling session or the communication session (S1950). The dispenser may terminate the current communication session in response to the termination request message (S1970). If further communications are impossible, the current session may be terminated without an additional notification.

When a safety-uncritical error is detected in the vehicle and the communication channel maintains an operable condition, the vehicle may send the termination request message to the dispenser with an "Action" attribute set to "Stop" and a "Reason" attribute set to an appropriate reason or reason code. An example of the appropriate reason or reason code may include a reason such as "message is corrupted".

The termination request message may be sent in error situations where a safety-uncritical communication error, a system error, or a qualitative error occurred excluding unrecoverable cases.

That is, for a successful refueling, the communication must convey actions that may be expected according to the protocol, and the refueling operation needs to be within an acceptable range of the fueling protocol. However, various abnormal events may occur in practice. While some of the errors are trivial and may be easily handled, some of the other errors are unrecoverable and may prevent the fueling from proceeding. The error handling procedure enables to define the safety-uncritical error conditions and provide exemplary error conditions and possible responses.

Examples of communication errors may include instances where the communication is disconnected, received data cannot be recognized due to an encoding error or a syntax error, or the received data is outside a permissible range. System errors may include an instance where the dispenser or vehicle detects a critical system error on its own. Qualitative errors may include an instance where the quality of communication performance does not meet a required level, or the quality of data integrity or precision fails to meet a required level.

The bidirectional communication process for hydrogen fueling according to the present embodiment may perform the following specific error handling procedures as outlined in (1) to (4) for the above-described error conditions.
(1) In case where a safety-uncritical error occurred and further communication is not possible, the vehicle and dispenser may immediately stop the fueling but may take a safe action and terminate the session by stopping the communication.
(2) In case where a safety-uncritical error occurred and the fueling is paused without being completed, the fueling protocol may define the fallback mechanism, for example, by defining the non-communication fueling method.
(3) In case where a safety-uncritical error is detected in the vehicle and the communication channel is still operational, the vehicle may send the termination request message to the dispenser with the "Action" attribute set to "Stop" and the "Reason" attribute set to an appropriate reason or reason code.
(4) In case where a safety-uncritical error is detected by the dispenser and the communication channel is still operational, the dispenser may immediately stop the fueling and send the termination request message to the dispenser with the "Action" attribute set to "Stop" and the "Reason" attribute set to an appropriate reason or reason code.

As described above, the bidirectional communication process for hydrogen fueling including the fueling protocol may define the error conditions related to the fueling protocol, provide the detection criteria, and perform the error handling procedures including the notification, the termination procedures, and the fallback mechanisms when an error is detected according to the detection criteria.

Meanwhile, when a safety-critical issue occurs during the fueling in the hydrogen fueling system, an urgent action may be required.

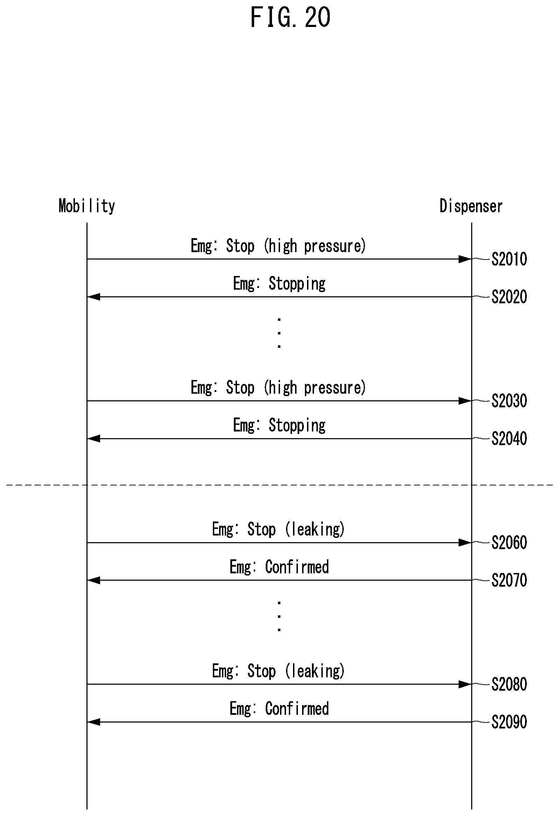

FIG. 20 is a sequence diagram illustrating an emergency handling procedure that may be employed in the bidirectional communication process for hydrogen fueling according to an exemplary embodiment of the present disclosure.

The emergency handling procedure may define safety-critical conditions requiring an emergency action during the fueling and may include responding procedures to prevent safety-critical accidents.

For the safe fueling, the communication must convey actions that may be expected according to the protocol, and the refueling operation needs to be within a safe range of the fueling protocol. However, a problem may occur during the fueling, causing the fueling system to reach a critical state that must be avoided at all costs. The emergency handling procedure enables to define safety-critical emergency conditions and possible actions to the emergency conditions, and may provide important cases to consider.

The fueling protocol may define emergency conditions related to the protocol, provide detection criteria for the emergency conditions and performance requirements of the vehicle or the dispenser, and prescribe responding procedures to avoid entering a hazardous situation.

As shown in FIG. 20, when a high pressure condition exceeding a preset reference value is detected by the vehicle during the hydrogen fueling process, the vehicle may send a first emergency stop request message including information requesting a fueling stop according to the high pressure (e.g., "Emg:Stop (High Pressure)") to the dispenser (S2010). The dispenser may send a response message including information indicating that the dispenser is processing an emergency fueling stop (e.g., "Emg:Stopping") to the vehicle in response to the first emergency stop request message (S2020).

In addition, upon receiving the response message or after a preset time has elapsed from a receipt of the response message, the vehicle may send the first emergency stop request message again to the dispenser (S2030). After urgently stopping the fueling, the dispenser may send a response message including information indicating that the fueling has been urgently stopped (e.g., "Emg: Stopped") to the vehicle (S2040).

Meanwhile, if a hydrogen fuel leakage is detected by the dispenser during the hydrogen fueling process, the dispenser may send a second emergency stop request message including information indicating that it is processing a fueling stop due to the leakage (e.g., "Emg:Stopping (Leak)") to the vehicle (S2060). The vehicle may send a response message including information indicating an acknowledgement of the second emergency stop request message (e.g., "Emg: Confirmed") to the dispenser (S2070).

In addition, the dispenser may send a third emergency stop notification message including information indicating that the fueling has been stopped because of the leakage (e.g., "Emg: Stopped (Leak)") to the vehicle (S2080). The vehicle may send a response message including information indicating an acknowledgement of the third emergency stop notification message (e.g., "Emg:Confirmed") to the dispenser (S2090).

According to the configuration described above, when the vehicle or the dispenser detects a critical situation affecting the safety, the vehicle and/or the dispenser may take necessary measures immediately to prevent a disaster from occurring, and, if possible, transmit an emergency notification message containing information on the situation to the other party and block the communication between the vehicle and the dispenser.

Upon receiving the emergency notification message, the vehicle or the dispenser may immediately respond to a situation indicated in the emergency notification message and terminate the communication without an excessive delay. The emergency notification message may include a header and a body including a message. The header may include information indicating an emergency notification, and the message may include values, information, or parameters for the class, type, and action of the emergency notification.

The emergency notification message may be transmitted by a TLS or DTLS message depending on the technology used for communication.

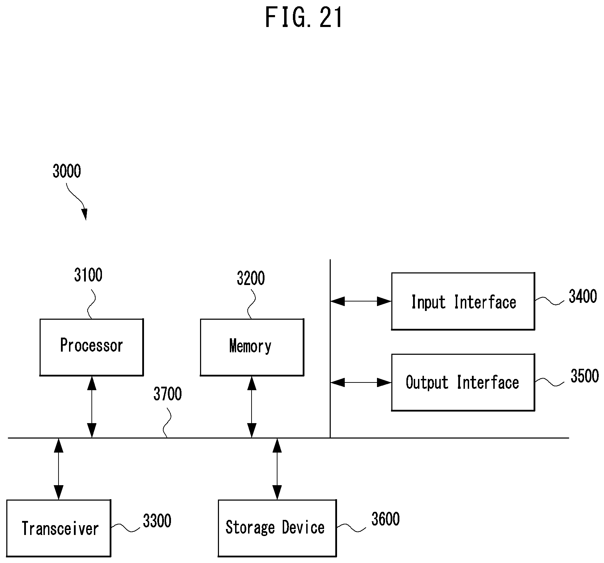

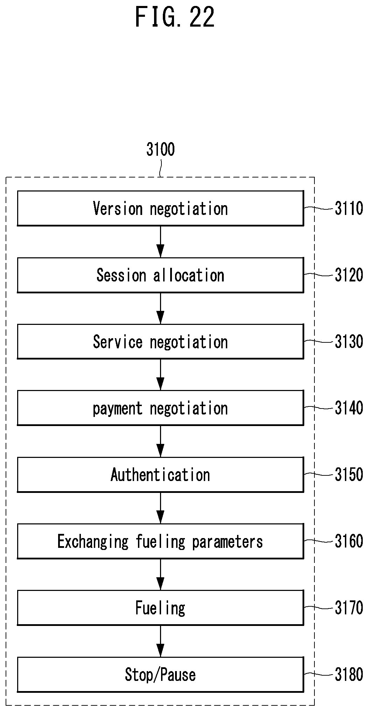

FIG. 21 is a schematic block diagram of a device using the bidirectional communication process for hydrogen fueling (simply referred to as a 'hydrogen fueling device') according to another exemplary embodiment of the present disclosure. FIG. 22 is a block diagram illustrating software modules that may be employed in the hydrogen fueling device of FIG. 21.

Referring to FIG. 21, the hydrogen fueling device 3000 may be implemented in the form of a computing device or a computing system including a processor 3100 electronically connected to a memory 3200.

The hydrogen fueling device 3000 may be a device providing hydrogen fueling services, or a hydrogen fueling control unit or a communication unit included in such a device. Similarly, the hydrogen fueling device 3000 may be a device receiving hydrogen fueling services, or a hydrogen fueling control unit or a communication unit included in such a device.

The hydrogen fueling device 3000 may be configured to include the processor 3100, the memory 3200, a transceiver 3300, an input interface 3400, an output interface 3500, a storage device 3600, and a bus (3700). The components of the hydrogen fueling device 3000 may be connected to each other by the bus 3700 to communicate with each other.

The processor 3100 may include a central processing unit (CPU), a graphics processing unit (GPU), or another kind of dedicated processor suitable for performing the method of the present disclosure.

Each of the memory 3200 and the storage device 3600 may include at least one of a volatile storage medium and a non-volatile storage medium. For example, the memory 3200 may be comprised of at least one of a read only memory (ROM) and a random access memory (RAM).

The hydrogen fueling device 3000 may perform at least a part of the bidirectional communication process for hydrogen fueling, the fueling protocol, the fueling method, the hydrogen fueling protocol, or the hydrogen fueling method according to the embodiment described above. To this end, the hydrogen fueling device 3000 may include at least one processor 3100 and a memory 3200 storing program instructions instructing the at least one processor 3100 to perform at least one step. The at least a part of the steps of the bidirectional process or method may be performed by the at least one processor 3100 loading and executing the program instructions from the memory 3200.

In addition, the hydrogen fueling device 3000 may include functional blocks 3110-3180 as shown in FIG. 22 in addition to the functional blocks UC1-UC11 described above with reference to FIG. 4. These functional blocks 3110-3180 may be mounted on the hydrogen fueling device 3000 or on the at least one processor 3100 of the hydrogen fueling device 3000.

The functional blocks 3110-3180 may include a first functional block 3110 for a version negotiation, a second functional block 3120 for a session allocation, a third functional block 3130 for a service negotiation, a fourth functional block 3140 for a payment negotiation, a fifth functional block 3150 for an authentication, a sixth functional block 3160 for exchanging fueling parameters, a seventh functional block 3170 for the fueling, and an eighth functional block 3180 for stopping/pausing of the fueling.

The first functional block 3110 may check and compare versions of communication protocols available for any of the fueling protocols when performing the handshake. In addition, the first functional block 3110) may check a TLS version, and so on.

The second functional block 3120 may assign an IP address, an IPv6 address, a session identifier, and so on by the vehicle or the dispenser.

The third functional block 3130 may negotiate services to be applied to each hydrogen fueled mobility based on a fueling tariff and user conveniences, and so on when there exist a difference in a hydrogen fueling service such as the fueling tariff according to a region, a time zone, or a service provider.

The fourth functional block 3140 may determine a payment method for the hydrogen fueling and handle a payment process.

The fifth functional block 3150 may handle at least one of user authentication, vehicle authentication, dispenser authentication, and hydrogen fueling station authentication. The fifth functional block 3150 may correspond to at least a part of the functional block of the discovery and pairing use case UC1.

The sixth functional block 3160 may correspond to at least a part of the functional block of the fueling parameter negotiation use case UC5.

The seventh functional block 3170) may monitor and control the fueling process and may correspond to at least a part of the monitoring and control use case UC7. In addition, the seventh functional block 3170 may correspond to at least some of a combination of the safe check-in use case UC6, the monitoring and control use case UC7, the safe check-out use case UC8, and the termination use case UC9.

The eighth functional block 3180 may stop or temporarily pause the fueling process or the fueling communication during the error handling or the emergency handling and may correspond to at least a part of a combination of the error handling use case UC10 and the emergency handling use case UC11.

In addition, the aforementioned hydrogen fueling device 3000 may be equipped with a computing device of various types that is mounted on the vehicle or dispenser. The computing device may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

A communication control apparatus of the hydrogen fueled mobility according to an exemplary embodiment of the present disclosure may include a memory 3200 storing at least one program instruction and a processor 3100 executing the at least one program instruction. The processor 3100, when executing the at least one program instruction, may be configured to: transmit, to a communication entity related to the dispenser 200, a first message including a list of at least one first fueling protocol supported by the hydrogen fueled mobility and at least one first communication protocol required for the at least one first fueling protocol; and receive, from the communication entity related to the dispenser 200, a response message including a second fueling protocol determined from the at least one first fueling protocol.

In the communication control apparatus of the hydrogen fueled mobility according to an exemplary embodiment of the present disclosure, the first message may include priority information based on the preference of the hydrogen fueled mobility.

In the communication control apparatus of the hydrogen fueled mobility according to an exemplary embodiment of the present disclosure, the response message may include the second fueling protocol determined from the at least one first fueling protocol based on the priority information based on the preference.

In the communication control apparatus of the hydrogen fueled mobility according to an exemplary embodiment of the present disclosure, the response message may include the second fueling protocol determined from at least one common protocol candidate commonly included in the at least one first fueling protocol and at least one fueling protocol supported by the dispenser 200.

In the communication control apparatus of the hydrogen fueled mobility according to an exemplary embodiment of the present disclosure, the response message may include the second fueling protocol determined from the at least one first fueling protocol by the controller of the dispenser 200.

In the communication control apparatus of the hydrogen fueled mobility according to an exemplary embodiment of the present disclosure, the response message may include a second communication protocol required for the second fueling protocol by the controller of the dispenser 200.

In the communication control apparatus of the hydrogen fueled mobility according to an exemplary embodiment of the present disclosure, the response message may include the second communication protocol determined from the at least one second communication protocol candidate required for the second fueling protocol by the controller of the dispenser 200.

In the communication control apparatus of the hydrogen fueled mobility according to an exemplary embodiment of the present disclosure, the response message may include the second communication protocol determined, by the controller of the dispenser 200, from a plurality of communication protocols required for the second fueling protocol according to a fallback device type determined based on the interoperability and/or the backward compatibility between the hydrogen fueled mobility 100 and the dispenser 200.

In the communication control apparatus of the hydrogen fueled mobility according to an exemplary embodiment of the present disclosure, the processor 3100 may transmit a negotiation request message for a negotiation of the hydrogen fueling communication protocol between the hydrogen fueled mobility 100 and the dispenser 200 to the communication entity related to the dispenser 200.

The processor 3100 may transmit a confirmation message in response to the response message to proceed with the negotiation, when the response message is accepted as a response to the negotiation request message.

The processor 3100 may transmit the first message to the communication entity related to the dispenser 200 as the negotiation request message.

On the other hand, although most of the embodiments described above focus on a method where the vehicle first transmits the communication protocols or the parameters to the dispenser, the present disclosure is not limited thereto and may be configured such that the dispenser first transmits the communication protocols or parameters of the dispenser to the vehicle. Such an embodiment has substantially the same features as the embodiments described above except for the changes in the transmitter and the receiver.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by use of a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A communication protocol negotiation method for hydrogen fueling performed by a communication controller of a hydrogen fueled mobility, comprising:
transmitting, to a communication entity related to a dispenser, a first message including a list of at least one first fueling protocol supported by the hydrogen fueled mobility and at least one first communication protocol required for the at least one first fueling protocol; and
receiving, from the communication entity related to the dispenser, a response message including a second fueling protocol determined from the at least one first fueling protocol.

2. The method of claim 1, wherein the first message comprises priority information based on a preference of the hydrogen fueled mobility.

3. The method of claim 2, wherein the response message comprises the second fueling protocol determined from the at least one first fueling protocol based on the priority information based on the preference.

4. The method of claim 1, wherein the response message comprises the second fueling protocol determined from at least one common protocol candidate commonly included in the at least one first fueling protocol and at least one fueling protocol supported by the dispenser.

5. The method of claim 1, wherein the response message comprises the second fueling protocol determined from the at least one first fueling protocol by a controller of the dispenser.

6. The method of claim 5, wherein the response message comprises a second communication protocol required for the second fueling protocol determined by the controller of the dispenser.

7. The method of claim 6, wherein the response message comprises the second communication protocol determined from at least one second communication protocol candidate required for the second fueling protocol by the controller of the dispenser.

8. The method of claim 7, wherein the response message comprises the second communication protocol determined, by the controller of the dispenser, from a plurality of communication protocols required for the second fueling protocol according to a fallback device type determined based on one or more of an interoperability or a backward compatibility between the hydrogen fueled mobility and the dispenser.

9. The method of claim 1, further comprising:
transmitting a negotiation request message for a communication protocol negotiation between the hydrogen fueled mobility and the dispenser by the communication controller of the hydrogen fueled mobility to the communication entity related to the dispenser, and
transmitting a confirmation message in response to the response message by the communication controller of the hydrogen fueled mobility to proceed with the negotiation, wherein the response message is accepted as a response to the negotiation request message.

10. The method of claim 9, wherein, the first message is transmitted to the communication entity related to the dispenser as the negotiation request message.

11. A communication control apparatus of a hydrogen fueled mobility, comprising:
a memory storing at least one program instruction; and
a processor executing the at least one program instruction,
wherein the processor is configured to:
transmit, to a communication entity related to a dispenser, a first message including a list of at least one first fueling protocol supported by the hydrogen fueled mobility and at least one first communication protocol required for the at least one first fueling protocol; and
receive, from the communication entity related to the dispenser, a response message including a second fueling protocol determined from the at least one first fueling protocol.

12. The communication control apparatus of claim 11, wherein the first message comprises priority information based on a preference of the hydrogen fueled mobility.

13. The communication control apparatus of claim 12, wherein the response message comprises the second fueling protocol determined from the at least one first fueling protocol based on the priority information based on the preference.

14. The communication control apparatus of claim 11, wherein the response message comprises the second fueling protocol determined from at least one common protocol candidate commonly included in the at least one first fueling protocol and at least one fueling protocol supported by the dispenser.

15. The communication control apparatus of claim 11, wherein the response message comprises the second fueling protocol determined from the at least one first fueling protocol by a controller of the dispenser.

16. The communication control apparatus of claim 15, wherein the response message comprises a second communication protocol required for the second fueling protocol determined by the controller of the dispenser.

17. The communication control apparatus of claim 16, wherein the response message comprises the second communication protocol determined from at least one second communication protocol candidate required for the second fueling protocol by the controller of the dispenser.

18. The communication control apparatus of claim 17, wherein the response message comprises the second communication protocol determined, by the controller of the dispenser, from a plurality of communication protocols required for the second fueling protocol according to a fallback device type determined based on one or more of an interoperability or a backward compatibility between the hydrogen fueled mobility and the dispenser.

19. The communication control apparatus of claim 11, wherein the processor is further configured to:
transmit a negotiation request message for a communication protocol negotiation between the hydrogen fueled mobility and the dispenser to the communication entity related to the dispenser, and
transmit a confirmation message in response to the response message to proceed with the negotiation, wherein the response message is accepted as a response to the negotiation request message.

20. The communication control apparatus of claim 19, wherein the processor is configured to transmit the first message to the communication entity related to the dispenser as the negotiation request message.
